# FASCICULE DE BREVET EUROPEEN

(11) **EP 4 589 096 B1**
(45) Date de publication et mention de la délivrance du brevet: **19.08.2026**
(21) Numéro de dépôt: 25150043.5
(22) Date de dépôt: 02.01.2025
(51) Int. Cl.: E04H 4/10, A01G 9/22, B60J 11/02, A63C 19/12, B60J 7/08

(54) **DISPOSITIF DE COUVERTURE D'UNE SURFACE COMPRENANT UN MÉCANISME DE TRANSLATION LONGITUDINALE DE TAMBOUR, MUNI D'UN SYSTÈME D'EMBRAYAGE**
VORRICHTUNG ZUM ABDECKEN EINER OBERFLÄCHE MIT EINEM MECHANISMUS ZUR LÄNGSÜBERSETZUNG DER TROMMEL, MIT EINEM KUPPLUNGSSYSTEM
DEVICE FOR COVERING A SURFACE COMPRISING A DRUM LONGITUDINAL TRANSLATION MECHANISM, PROVIDED WITH A CLUTCH SYSTEM

(30) Priorité: 22.01.2024 BE 202405035
(43) Date de publication de la demande: 23.07.2025
(73) Titulaire: Becoflex, 7110 Strépy-Bracquegnies (BE)
(72) Inventeur: COENRAETS, Benoît, 7110 Strepy-Bracquegnies (BE)
(74) Mandataire: Gevers Patents

(56) Documents cités:
- EP-A1- 4 306 745
- EP-B1- 3 730 724
- WO-A1-2023/011789

## Description

### DOMAINE DE L'INVENTION

L'invention se rapporte à un dispositif de couverture d'une surface, aisé à mettre en œuvre et répondant au mieux aux exigences de l'application concernée. En particulier, la présente invention concerne un dispositif de couverture dans lequel la couverture est enroulée autour d'un essieu du tambour formant avec ce dernier un tambour configuré pour se déplacer,
- dans un sens de fermeture permettant le déploiement de la couverture au-dessus de la surface et activé par l'enroulement de premier et second cordons de fermeture autour d'un essieu de fermeture par la rotation de ce dernier, et
- dans un sens d'ouverture permettant le retrait de la couverture de la surface et activé par l'enroulement de la couverture autour de l'essieu du tambour par la rotation de ce dernier

La couverture comprend un jonc en saillie permettant le verrouillage réversible des bords longitudinaux de la couverture lors de son déploiement. Le dispositif de couverture de la présente invention est particulièrement simple et robuste.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, Par exemple, un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US6691334, GB2379163 et FR2652373. Il est clair qu'ici compte tenu de la manutention et du stockage, seules des piscines d'assez petite taille sont concernées.

Beaucoup de dispositifs utilisent un tambour rotatif pour enrouler et stocker la couverture lorsque la surface est découverte. On peut classer les dispositifs de couverture d'une surface utilisant un tambour rotatif en deux catégories.
Dispositifs comprenant un tambour fixé à l'une des extrémités transversales de la surface à protéger. La couverture est déployée par traction, en se déroulant du tambour et est traînée le long de la surface lors de son déploiement et aussi de son retrait. Ceci génère des frictions importantes qui augmentent la force nécessaire aux déploiement et retrait de la couverture, et accélère l'usure de la couverture. Des dispositifs de couverture automatiques sont illustrés notamment dans les documents suivants : US3574979, GB2199741, US2005/0097834, CA2115113, US2001/0023506, US5930848, US400190..
Dispositifs dans lesquels le tambour est monté sur un mécanisme de translation longitudinale motorisé ou manuel. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Des exemples de dispositifs automatiques de ce type sont divulgués par exemple dans les documents suivants: WO2005/026473, FR2900951, DE2257231, FR2893651, FR2789425, FR2743502, EP1719858, WO2023011789.

La présente invention concerne les dispositifs (b) dans lesquels le tambour est configuré pour se déplacer en translation longitudinale pour les avantages qu'ils présentent par rapport aux dispositifs (a) comprenant un tambour fixé à une extrémité transversale de la surface.

Dans le présent document, les termes « longitudinal » « transversal » et leurs dérivés se réfèrent respectivement à la direction de déplacement du tambour, qui est parallèle à un axe longitudinal (X) et à la direction de l'axe de révolution du tambour, qui est parallèle à un axe transversal (Y). Les termes « amont » et « aval » sont défini selon la direction de translation du tambour qui est toujours indiquée lors de leur utilisation.

Dans beaucoup d'applications, il est avantageux de verrouiller les bords longitudinaux de la couverture au fur et à mesure qu'elle se déploie. Ceci est particulièrement intéressant dans le cas de piscines, car cela permet d'éviter que des personnes s'engageant sur la couverture ne soient précipitées dans l'eau à travers un espace entre le bord longitudinal de la couverture et la margelle de la piscine. En outre, étanchéifier la zone de contact périphérique entre la couverture et les bords longitudinaux de la surface peut éviter l'introduction dans la piscine de saletés, feuilles mortes et brindilles ainsi que de petits animaux tels que des souris ou des serpents. Cela ouvre aussi la possibilité de pressuriser le volume d'air se trouvant entre la surface de l'eau et la surface inférieure de la couverture, afin de gonfler celle-ci. Des dispositifs plus sophistiques ont été proposés permettant de fixer de manière réversible les bords longitudinaux de la couverture lors de son déploiement, tel que dans le document FR2803769 qui prévoit un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Un système avantageux permettant simultanément de fixer les bords longitudinaux de la couverture lors de son déploiement et d'exercer une force de traction transversale sur celle-ci pour la tendre parfaitement a été divulgué dans WO2010/010152, WO2010054960 et dans WO2014064138, WO2023170500 et WO2023011789. Dans ces dispositifs, les bords longitudinaux de la couverture sont munis d'un jonc ou bourrelet continu qui est introduit dans l'ouverture orientée vers le haut d'un rail en forme de profilé de section en « U », avec une ou deux ailettes refermant partiellement ladite ouverture. Le bourrelet venant se glisser sous une ailette et retenue dans cette position par des moyens de fixations adéquats, permet de fixer solidement les bords longitudinaux de la couverture.

Le système de déplacement du tambour décrit dans WO2010054960 comprend d'une part, un chariot comprenant à chacune de ses extrémités :
- une roue d'entraînement dont l'axe de rotation est parallèle à celui du tambour, qui est de préférence motorisée ;
- au moins deux roulettes reposant sur les rails et permettant la translation longitudinale du chariot), et étant montées de part et d'autre de la roue d'entraînement, et constituant avec celle-ci un triangle dont la roue d'entraînement forme le sommet supérieur et, d'autre part
   deux courroies flexibles fixées uniquement à chacune de leurs extrémités aux quatre coins de la surface à couvrir, chacune des deux courroies,

- étant disposée dans l'ouverture des rails dans des sections latérales comprises entre un point de fixation et la roulette la plus proche dudit point de fixation, et
- coiffant sans glissement la roue d'entraînement dans la section centrale comprise entre les deux roulettes

La rotation des roues d'entraînement qui accrochent sans glissement les courroies flexibles qui sont fixes, entraine la translation du tambour le long des rails. La translation du tambour dans le sens de fermeture depuis une seconde largeur de la surface à laquelle la couverture est fixée, vers une première largeur de la surface entraine également automatiquement la rotation du tambour qui déroule spontanément la couverture par la force exercée sur la couverture par son extrémité fixée à la seconde largeur de la surface. La rotation du tambour permet également de bander un ressort à torsion qui atteint son point maximum de bandage lorsque le tambour atteint la première largeur de la surface et que la couverture recouvre complétement la surface. Lorsque le tambour se déplace dans le sens (inverse) d'ouverture, le ressort à torsion se détend entraînant la rotation du tambour permettant d'enrouler la couverture autour de l'essieu du tambour.

Ce système de translation donne d'excellents résultats et a été implémenté dans de nombreuses réalisations, en particulier pour des couvertures de piscines. Cependant, le bandage du ressort à torsion nécessaire à la rotation du tambour permettant l'enroulement de la couverture lorsque celle-ci est retirée de la surface requiert une énergie supplémentaire au moteur entrainant la rotation de la roue d'entrainement lors du déploiement de la couverture lorsque le tambour se déplace dans le sens de fermeture. De plus, le montage du ressort dans le tambour est délicat et ne peut être fait par un amateur. Le poids du dispositif en est également augmenté ce qui augmente les couts de livraison. Il serait toutefois désirable de diminuer le nombre de pièces et leur poids, ainsi que de réduire la complexité de montage afin de baisser le prix du dispositif et de permettre à un acheteur de prendre livraison lui-même du dispositif démonté afin qu'il le monte lui-même ou le fasse monter par des ouvriers qui ne sont pas nécessairement formés et qualifiés pour monter le dispositif.

WO2023011789 propose une solution simplifiée dont le système de translation ne comporte pas de ressort de torsion. La translation du tambour dans le sens de fermeture se fait par la rotation du tambour par un premier moteur, et la translation dans le sens d'ouverture se fait par la rotation de bobines fixées à rotation au chariot et entrainée par un second moteur, permettant d'enrouler un cordon de fermeture fixé à chaque angle de la première largeur de la surface et d'ainsi déplacer le chariot. Ce système de translation réduit considérablement le nombre de pièces du dispositif et surtout permet d'omettre le ressort de torsion. Cependant, lorsque le premier moteur tourne pour enrouler le tambour, il doit compenser la forte résistance du second moteur qui ne tourne pas en roue libre et inversement. Les premier et second moteur doivent donc être surdimensionnés et leur consommation d'énergie augmente en conséquence.

Il serait intéressant d'avoir un dispositif de couverture donnant les mêmes avantages que celui décrit dans WO2023011789, mais sans les efforts additionnels causés par le moteur à vide et, de préférence, n'utilisant qu'un seul moteur pour la translation du tambour. La présente invention propose un tel dispositif, dont la simplicité permet à des personnes non-spécifiquement qualifiées de le monter. Ces avantages et autres avantages sont décrits plus en détails dans les sections suivantes.

### RÉSUMÉ DE L'INVENTION

L'invention est telle que définie dans la revendication principale et des variantes préférées sont définies dans les revendications dépendantes. La présente invention concerne un dispositif de couverture d'une surface comprise dans un rectangle de première et seconde longueur s'étendant parallèles à un axe longitudinal (X) et de première et seconde largeurs s'étendant parallèles à un axe transversal (Y), normal à l'axe longitudinal (X). Le dispositif comprend une couverture, deux rails, un tambour formé par la couverture enroulée autour d'un essieu et monté sur un mécanisme de translation longitudinale le long des rails, et un système d'insertion pour verrouiller les bords de la couverture borde dans une rainure de chacun des rails.

La couverture est sensiblement rectangulaire de dimensions égales à celle du rectangle. Elle comprend,
- premier et second bord transversal opposé l'un à l'autre, le second bord transversal de la couverture étant fixé à la seconde largeur de la surface à couvrir, et
- premier et second bord longitudinal opposé l'un à l'autre chaque bord longitudinal étant muni d'un jonc formant un élément en saillie, s'étendant le long de chaque bord longitudinal

Les deux rails sont placés de part et d'autre de ladite surface parallèles à l'axe longitudinal (X). Chaque rail est constitué d'un profilé ayant une ouverture sur une de ses faces et orientée à l'opposé de la surface à couvrir, formant une rainure s'étendant tout le long de chaque rail.

Le tambour comprenant l'essieu qui est monté à rotation à un premier et second châssis à chacune de deux extrémités de l'essieu. L'essieu supporte la couverture et est apte à enrouler et dérouler la couverture fixée à l'essieu par son premier bord transversal. Le tambour est monté sur le mécanisme de translation longitudinale permettant la translation longitudinale du tambour le long des deux rails,
∘ dans un sens d'ouverture parallèle à l'axe longitudinal (X) permettant l'enroulement de la couverture et son retrait de ladite surface, entraînée par la rotation de l'essieu autour d'un axe d'essieu, et
∘ dans un sens de fermeture parallèle à l'axe longitudinal (X) permettant le déroulement de la couverture et son déploiement au-dessus de la surface à couvrir entrainée par la rotation de première et seconde bobine de fermeture montées à rotation autour d'un axe de fermeture (11) au premier et second châssis (23) et couplées à des premier et second cordon de fermeture configurés pour entrainer le déplacement du tambour dans le sens de fermeture lors de la rotation des première et seconde bobine de fermeture.

Le système d'insertion est couplé, de préférence rigidement, aux châssis de chaque côté de la surface à couvrir. Il est configuré,
- pour insérer et verrouiller le jonc de chaque bord longitudinal de la couverture dans l'ouverture du rail correspondant lors de la translation dans le sens de fermeture du tambour entraînant le déroulement de la couverture, et
- pour déverrouiller et sortir le jonc de chaque bord longitudinal de la couverture hors de l'ouverture du rail correspondant lors de la translation dans le sens d'ouverture du tambour entraînant l'enroulement de la couverture.

L'invention se distingue de l'art antérieur, d'une part, en ce qu'un moteur unique ou manivelle est monté sur le premier châssis et est configuré pour entrainer la rotation d'un axe d'entrainement et, d'autre part, en ce que le dispositif comprend un système d'embrayage configuré pour que la rotation de l'axe d'entrainement n'entraine la rotation que d'un des axes de fermeture et d'essieu à la fois, en passant entre,
- un état d'enclenchement à l'axe d'essieu de sorte à transmettre un mouvement de rotation de l'axe d'entrainement à l'axe d'essieu pour déplacer le tambour dans la direction d'ouverture et,
- un état d'enclenchement à l'axe de fermeture de sorte à transmettre un mouvement de rotation de l'axe d'entrainement à l'axe de fermeture pour déplacer le tambour dans le sens de fermeture.

Dans une première variante, le système d'embrayage comprend,
- une roue de fermeture configurée pour tourner avec l'axe de fermeture,
- une roue d'essieu configurée pour tourner avec l'axe d'essieu,
- un système d'entrainement comprenant première et seconde roue d'entrainement montées coaxialement de manière rigide à l'axe d'entrainement et configurées pour tourner avec l'axe d'entrainement,
- une courroie de fermeture formant une boucle fermée reliant la première roue d'entrainement à la roue de fermeture, et
- une courroie d'essieu formant une boucle fermée reliant la seconde roue d'entrainement à la roue d'essieu.

Ce système d'embrayage fonctionne de la manière suivante,
- dans l'état d'enclenchement à l'axe de fermeture, la courroie de fermeture est au moins partiellement tendue, de sorte que la rotation de la première roue d'entrainement entraine la rotation de la roue de fermeture, alors que la courroie d'essieu est détendue,
- dans l'état d'enclenchement à l'axe d'essieu , la courroie d'essieu est au moins partiellement tendue, de sorte que la rotation de la seconde roue d'entrainement entraine la rotation de la roue d'essieu, alors que la courroie de fermeture est détendue.

Dans un premier mode de réalisation de la première variante définie ci-dessus, les axes d'entrainement, de fermeture et d'essieu sont à des positions relatives fixes entre eux et séparés les uns des autres de sorte que les courroies de fermeture et d'essieu sont toutes deux détendues,. Le système d'embrayage comprend,
- une roulette de fermeture appliquant une pression sur la courroie de fermeture contre la roue de fermeture,
- une roulette d'essieu appliquant une pression sur la courroie d'essieu contre la roue d'essieu,
- une roulette d'enclenchement de fermeture et une roulette d'enclenchement d'essieu montées sur une structure.

La structure supportant les roulettes de fermeture et d'essieu est configurée pour déplacer la roulette d'enclenchement de fermeture et la roulette d'enclenchement d'essieu entre l'état d'enclenchement à l'axe de fermeture et l'état d'enclenchement à l'axe d'essieu, de la manière suivante,
- dans l'état d'enclenchement à l'axe de fermeture, la roulette d'enclenchement de fermeture est déplacée, de préférence par rotation de la structure, jusqu'à appliquer une pression sur la courroie de fermeture contre la première roue d'entrainement, alors que la roulette d'enclenchement d'essieu n'applique pas ou moins de pression sur la courroie d'essieu, et
- dans l'état d'enclenchement à l'axe d'essieu, la roulette d'enclenchement d'essieu est déplacée, de préférence par rotation de la structure, jusqu'à appliquer une pression sur la courroie d'essieu contre la seconde roue d'entrainement, alors que la roulette d'enclenchement de fermeture n'applique pas ou moins de pression sur la courroie de fermeture.

Dans un second mode de réalisation de la première variante définie ci-dessus, l'axe d'entrainement est configuré pour être déplacé pour varier une première distance le séparant de l'axe de fermeture entre une première distance d'enclenchement et une première distance de désenclenchement, et pour simultanément varier une seconde distance le séparant de l'axe d'essieu entre une seconde distance de désenclenchement et une seconde distance d'enclenchement, respectivement. Le déplacement de l'axe d'entraînement permet ainsi de faire tourner,
- soit uniquement la roue d'essieu et l'axe d'essieu, afin de déplacer le tambour dans le sens d'ouverture, avec la première distance de désenclenchement et la seconde distance d'enclenchement,
- soit uniquement la roue de fermeture et l'axe de fermeture afin de déplacer le tambour dans le sens de fermeture, avec la première distance d'enclenchement) et la seconde distance de désenclenchement,

Dans un troisième mode de réalisation de la première variante définie ci-dessus, les axes d'entrainement, de fermeture et d'essieu sont à des positions relatives fixes entre eux et séparés les uns des autres de sorte que les courroies de fermeture et d'essieu sont toutes deux détendues. Une roulette d'enclenchement est reliée à un axe parallèle aux axes d'entrainement, de fermeture et d'essieu ), et qui (l'axe) peut être déplacé entre,
- une première position d'enclenchement dans laquelle la roulette d'enclenchement appuie sur la courroie de fermeture la tendant entre la première roue d'entrainement et la roue de fermeture définissant ainsi l'état d'enclenchement à l'axe de fermeture et
- une seconde position d'enclenchement dans laquelle la roulette d'enclenchement appuie sur la courroie d'essieu la tendant entre la seconde roue d'entrainement et la roue d'essieu définissant ainsi l'état d'enclenchement à l'axe d'essieu.

Dans une seconde variante de l'invention, le système d'embrayage ne comprend pas de courroies de fermeture et d'essieu. Le système d'embrayage comprend,
- une roue de fermeture configurée pour tourner avec l'axe de fermeture,
- une roue d'essieu configurée pour tourner avec l'axe d'essieu, et
- un système d'entrainement comprenant première et seconde roue d'entrainement montées coaxialement de manière rigide à l'axe d'entrainement et configurées pour tourner avec l'axe d'entrainement.

L'axe d'entrainement est configuré pour être déplacé entre,
- une position de fermeture dans laquelle la première roue d'entrainement est en contact de frottement avec la roue de fermeture définissant l'état d'enclenchement à l'axe de fermeture et
- une position d'essieu dans laquelle la seconde roue d'entrainement est en contact de frottement avec la roue d'essieux définissant l'état d'enclenchement à l'axe d'essieu.

Dans une troisième variante de l'invention, le système d'embrayage ne comprend pas de courroies de fermeture et d'essieu. Le système d'embrayage comprend,
- une roue de fermeture) configurée pour tourner avec l'axe de fermeture,
- une roue d'essieu configurée pour tourner avec l'axe d'essieu, et
- un système d'entrainement comprenant première et seconde roue d'entrainement montées coaxialement de manière rigide à l'axe d'entrainement et configurées pour tourner avec l'axe d'entrainement.

Les axes d'entrainement, de fermeture et d'essieu sont à des positions relatives fixes entre eux et séparés les uns des autres de sorte que les première et seconde roue d'entrainement, de fermeture et d'essieu ne se touchent pas. Le dispositif comprend de plus une roulette d'enclenchement reliée à un axe parallèle aux axes d'entrainement de fermeture et d'essieu, qui (l'axe) peut être déplacé entre ,
- une position de contact à la roue de fermeture dans laquelle la roulette d'enclenchement) est en contact de frottement avec la première roue d'entrainement et la roue de fermeture définissant ainsi l'état d'enclenchement à l'axe de fermeture et
- une position de contact à l'essieu dans laquelle la roulette d'enclenchement est en contact de frottement avec la seconde roue d'entrainement et la roue d'essieu définissant ainsi l'état d'enclenchement à l'axe d'essieu.

Dans un mode de réalisation préféré des seconde et / ou troisième variantes (= ne comprenant pas de courroie de fermeture et d'essieu), les première et seconde roues d'entrainement, la roue de fermeture et la roue d'essieu sont des roues dentées ou ont des surfaces de jantes adhérentes, de préférence structurées, permettant une transmission de rotation d'une roue à l'autre sans glissement lorsqu'elles sont en contact de frottement.

Afin de controller la rotation libre de l'axe qui n'est pas enclenché, le système d'embrayage peut être configuré pour freiner de manière contrôlée sa libre rotation d'une des manières suivantes,
- un élément de freinage configuré pour appliquer une force de friction sur l'axe ou la roue de fermeture (11, 11r) ou d'essieu (12, 12r) qui n'est pas entrainé en rotation par le système d'entrainement (10r), de préférence l'élément de freinage est résilient et encore de préférence, l'élément de freinage est mobile selon l'état d'enclenchement du système d'embrayage, n'appliquant une force de friction que sur l'axe ou la roue (11, 11r, 12, 12r) qui n'est pas entrainé en rotation par le système d'entrainement (10r), ou
- dans un dispositif selon la première variante (avec courroies), la courroie de fermeture ou la courroie d'essieu qui est détendue applique une force de friction sur la roue de fermeture ou la roue d'essieu correspondante qu'elle entoure, suffisante pour freiner la libre rotation de l'axe correspondant.

Dans une forme du dispositif, la rainure dans chaque rail est partiellement fermée par une aile. Le dispositif comprend à chaque rail une courroie de verrouillage fixée à chaque extrémité du rail logée dans la rainure entre chaque extrémité et le châssis correspondant, et sort de la rainure au niveau du châssis correspondant par l'action de poulies de renvoi. Les poulies de renvoi sont configurées pour insérer la courroie de verrouillage dans la rainure en aval du système d'insertion afin de coincer le jonc sous l'aile en ne laissant qu'un espace ouvert dans l'ouverture insuffisant pour permettre au jonc de sortir de la rainure par l'ouverture, dans lequel le terme aval est défini par rapport au sens de fermeture.

Dans un mode de réalisation particulièrement préféré de cette dorme du dispositif, les courroies de verrouillage sont formées par les cordons de fermeture, qui coiffent sans glissement les roues de fermeture (11r) correspondantes. Ainsi, les courroies de fermeture cumulent les fonctions de déplacement du tambour dans le sens de fermeture et de verrouillage / déverrouillage des bords longitudinaux de la couverture dans les rainures des rails.

Dans une forme alternative du dispositif, l'ouverture de chaque rail donne accès à un espace dans le rail de dimensions selon l'axe transversal supérieures à celle de l'ouverture. Dans une coupe transversale, normale à l'axe longitudinal (X), l'ouverture de la rainure a une largeur maximale (Lo), et l'espace a une largeur maximale supérieure à la largeur maximale (Lo) de l'ouverture (Lo < Le), où les largeurs maximales (Lo, Le) sont mesurées parallèles à l'axe transversal (Y).

Dans une coupe normale à chaque bord longitudinal de la couverture, le jonc correspondant définit une géométrie allongée définie par un rapport (D / d) d'un premier diamètre (D) à un second diamètre (d) supérieur à l'unité (i.e. D / d > 1), de préférence, le rapport D / d > 1.3, encore de préférence D / d > 1.5. Le premier diamètre (D) est défini comme la longueur de la ligne droite reliant les deux points les plus éloignés l'un de l'autre du périmètre de la géométrie et le second diamètre (d) est la longueur de la plus longue ligne droite perpendiculaire au premier diamètre (D) qui relie deux points du périmètre.

Le système d'insertion est configuré pour orienter le jonc à travers l'ouverture du rail correspondant en présentant un diamètre compris entre d et D et inférieur à Lo, le jonc changeant d'orientation une fois que le jonc se trouve dans l'espace de sorte qu'une fois inséré dans l'espace, le jonc occupant seul l'espace ne puisse en ressortir par la seule action d'une force (F) appliquée parallèle à l'axe transversal (Y) dans la direction de la surface à couvrir.

Dans un mode de réalisation du dispositif, le second châssis ne comprend pas de moteur et l'axe de fermeture du premier châssis s'étend parallèle à l'axe transversal (Y) jusqu'à la bobine de fermeture du second châssisde sorte que la rotation de la bobine de fermeture du premier châssis entraîne la rotation synchrone de la bobine de fermeture) du second châssis.

Dans un second mode de réalisation, plus adapté à des surfaces de grandes dimensions, le second châssis comprend un second moteur unique configuré pour faire tourner l'axe d'entrainement et **en** ce **que** le dispositif comprend un système d'embrayage identique à celui du premier châssis, configuré pour que le second moteur n'entraine la rotation que d'un des axes de fermeture et d'essieu à la fois.

Il est préféré que le moteur ou la manivelle tourne dans le même sens dans les directions d'ouverture (Do) et de fermeture (Dc). Cela permet d'utiliser des moteurs plus bon marché et d'éviter de se tromper de sens de rotation de la manivelle.

La présente invention concerne aussi l'utilisation du dispositif de la présente invention pour couvrir une surface (3) sélectionnée parmi :
(a) un bassin rempli ou non d'un liquide, le bassin étant choisi parmi une piscine, jacuzzi, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule ?

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
**Fig.1a et 1b** vues d'ensemble de deux exemples de dispositif selon l'invention de couverture d'une surface formée par une piscine.
**Fig.2a et 2b** vue d'une variante du système d'embrayage de la présente invention (a) en position de translation dans le sens d'ouverture (= rotation du tambour) et (b) en position de translation dans le sens de fermeture (= rotation de la roue de fermeture).
**Fig.3a et 3b** vue d'une variante alternative du système d'embrayage de la présente invention (a) en position de translation dans le sens d'ouverture (= rotation du tambour) et (b) en position de translation dans le sens de fermeture (= rotation de la roue de fermeture).
**Fig.4a** **et** **5b** vue d'une variante alternative du système d'embrayage de la présente invention (a) en position de translation dans le sens d'ouverture (= rotation du tambour) et (b) en position de translation dans le sens de fermeture (= rotation de la roue de fermeture).
**Fig.5a et 5b** vue d'une variante alternative du système d'embrayage de la présente invention (a) en position de translation dans le sens d'ouverture (= rotation du tambour) et (b) en position de translation dans le sens de fermeture (= rotation de la roue de fermeture).
**Fig.6a et 6b** vue d'une variante alternative du système d'embrayage de la présente invention (a) en position de translation dans le sens d'ouverture (= rotation du tambour) et (b) en position de translation dans le sens de fermeture (= rotation de la roue de fermeture).
**Fig.7a et 7b** vue d'une variante alternative du système d'embrayage de la présente invention (a) en position de translation dans le sens d'ouverture (= rotation du tambour) et (b) en position de translation dans le sens de fermeture (= rotation de la roue de fermeture).
**Fig. 8a et 8b** vue d'un exemple de châssis du dispositif selon l'invention (a) vue depuis la surface à couvrir et (b) vue du système d'embrayage.
**Fig. 9a** Montre un exemple de vue de face d'une courroie d'un système d'embrayage enveloppant la première ou seconde roue d'entrainement d'un système d'entrainement ou la roue de fermeture ou d'essieu,
**Fig. 9b** Montre un exemple en coupe transversale des courroies de fermeture et d'essieu enveloppant les première et seconde roue d'entrainement d'un système d'entrainement.
**Fig.9c** Montre un exemple en coupe transversale d'une courroie de fermeture ou d'essieu enveloppant la roue de fermeture ou d'essieu correspondante.
**Fig. 10a et 10b** **vue** en transparence du fonctionnement d'une variante de système d'embrayage sur la direction de translation du chariot, (a) embrayage en position de fermeture en entrainant la rotation de la roue de fermeture et (b) embrayage en position d'ouverture en entrainant la rotation du tambour.
**Fig. 10c et 10d** vues d'un système d'embrayage comprenant un frein couplé mécaniquement au levier permettant d'appliquer une pression sur l'axe en roue libre selon la position du levier.
**Fig. 11a à 11d** Variante de système d'insertion et de verrouillage du jonc dans la rainure du rail (a) coupe transversale du jonc amené au-dessus de l'ouverture, (b) coupe transversale du jonc orienté pour permettre sa pénétration à travers l'ouverture, (c) verrouillage du jonc dans l'espace de la rainure, et (d) vue en perspective du jonc verrouillé dans la rainure.
**Fig. 12a à 12d** Variante de système d'insertion et de verrouillage du jonc dans la rainure du rail (a) coupe transversale du jonc amené au-dessus de l'ouverture, (b) coupe transversale du jonc orienté pour permettre sa pénétration à travers l'ouverture, (c) verrouillage du jonc dans l'espace de la rainure par l'insertion du cordon de fermeture dans la rainure, et (d) vue en perspective du jonc verrouillé dans la rainure par le cordon de fermeture.
**Fig. 13a à 13c** vues de face et en coupe d'un premier exemple d'une variante préférée de système d'embrayage selon l'invention en configurations (a) neutre, (b) d'enclenchement à l'axe d'essieu et (c) d'enclenchement à l'axe de fermeture.
**Fig.13d** vue en perspective de l'exemple de système d'embrayage selon les Figures 13a à 13c.
**Fig.14a à 14c** vues de face d'un second exemple de la variante préférée de système d'embrayage dont le premier exemple est représenté aux Figures 13a à 13d en configurations (a) neutre, (b) d'enclenchement à l'axe d'essieu et (c) d'enclenchement à l'axe de fermeture.
**Fig.15a à 15c** vues de face d'un troisième exemple de la variante préférée de système d'embrayage dont les premier et second exemple sont représentés aux Figures 13a à 13d et 14a à 14c en configurations (a) neutre, (b) d'enclenchement à l'axe d'essieu et (c) d'enclenchement à l'axe de fermeture.
**Fig. 16a à 16c** Variante alternative de système de translation du tambour et d'insertion et verrouillage du jonc dans la rainure du rail à l'aide du cordon de fermeture, (a) vue en perspective de la courroie de fermeture au niveau du châssis, (b) coupe transversale du rail en aval du châssis, avec le jonc de la couverture verrouillé sous l'aile de la rainure par le cordon de fermeture et (c) coupe transversale du rail en amont du châssis, avec le cordon de fermeture inséré dans la rainure ; les termes « amont » et « aval » étant définis par rapport au sens de fermeture de translation.

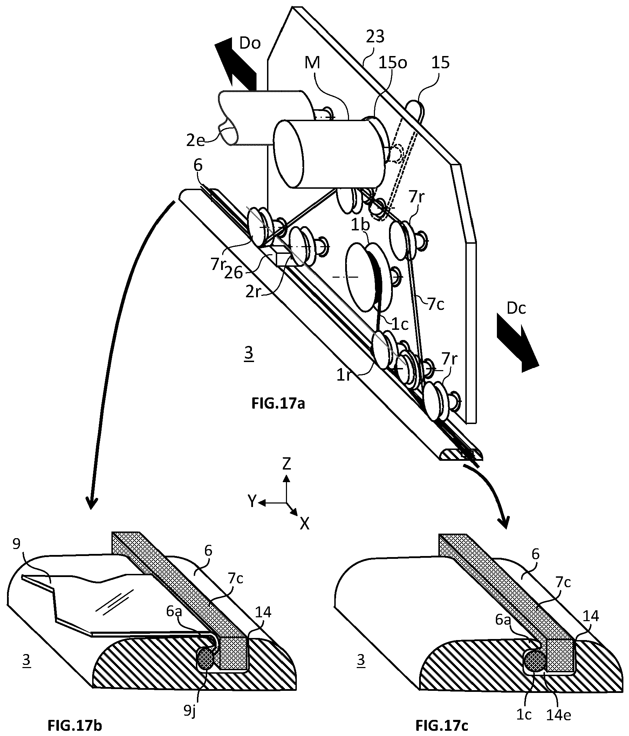

**Fig. 17a à 17c** Variante alternative de système de translation du tambour et d'insertion et verrouillage du jonc dans la rainure du rail à l'aide d'une courroie de verrouillage, (a) vue en perspective de la courroie de verrouillage au niveau du châssis, (b) coupe transversale du rail en aval du châssis, avec le jonc de la couverture verrouillé sous l'aile de la rainure par la courroie de verrouillage et (c) coupe transversale du rail en amont du châssis, avec le cordon de fermeture la courroie de verrouillage insérées dans la rainure ; les termes « amont » et « aval » étant définis par rapport au sens de fermeture de translation.

### DESCRIPTION DÉTAILLÉE DE L'INVENTION

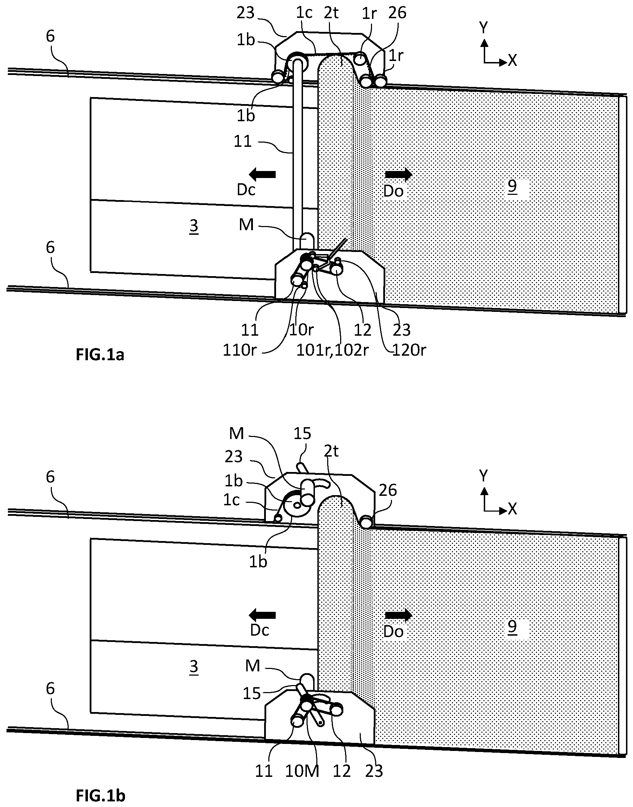

Tel que représenté aux Figures 1a et 1b, le dispositif (automatique) de couverture d'une surface (3) selon l'invention comprend une couverture (9) destinée à protéger ladite surface (3). La surface (3) est comprise dans un rectangle de première et seconde longueur s'étendant parallèles à un axe longitudinal (X) et de première et seconde largeur s'étendant parallèles à un axe transversal (Y), normal à l'axe longitudinal (X) et définissant avec celui-ci un plan (X, Y). Le dispositif permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en œuvre dans tout domaine nécessitant la couverture d'une surface, comme par exemple un terrain de sport, tel qu'un terrain de tennis en terre battue ou en gazon, une caisse de véhicule, une surface vitrée par exemple de serre, de fenêtre de véhicule tel que train ou bus, ou de jardin d'hiver, ou une ouverture dans une paroi ou plafond, etc. D'une manière générale, on entend donc dans la présente demande par « surface » toute zone délimitée par un périmètre sensiblement rectangulaire.

Le dispositif comprend une couverture (9), deux rails (6), un tambour (2t), un système d'insertion et verrouillage de la couverture dans les rails, et un système d'embrayage permettant de connecter un moteur alternativement au tambour et à une bobine de fermeture (1b) permettant la translation du tambour dans les directions d'ouverture (Do) et de fermeture (Dc).

La couverture (9) est sensiblement rectangulaire de dimensions égales à celle du rectangle. La couverture (9) a, d'une part,
- premier et second bord transversal opposé l'un à l'autre, le second bord transversal de la couverture est fixé à la seconde largeur de la surface à couvrir et, d'autre part,
- premier et second bord longitudinal opposé l'un à l'autre chaque bord longitudinal étant muni d'un jonc (9j) formant un élément en saillie, s'étendant le long de chaque bord longitudinal.

Comme illustré aux Figures 1a et 1b, les deux rails (6) sont placés de part et d'autre de ladite surface (3) parallèles à l'axe longitudinal (X). Chaque rail est constitué d'un profilé ayant une ouverture (14) sur une de ses faces et orientée à l'opposé de la surface à couvrir, formant une rainure s'étendant tout le long de chaque rail.

Le tambour (2t) comprend un essieu (2e) monté à rotation à un premier et second châssis (23) à chacune de deux extrémités de l'essieu. Le tambour supporte la couverture (9) et est apte à enrouler et dérouler la couverture (9) fixée à l'essieu par son premier bord transversal. Le tambour (2t) est monté sur un mécanisme de translation longitudinale permettant la translation longitudinale du tambour le long des deux rails dans un sens d'ouverture (Do) et dans un sens de fermeture (Dc).

Le sens d'ouverture (Do) de translation du tambour (2t) est parallèle à l'axe longitudinal (X) et permet l'enroulement de la couverture et son retrait de ladite surface (3). La rotation du tambour (2t) est entraînée par la rotation d'un moteur (M) ou d'une manivelle faisant tourner un axe d'essieu (12) et l'essieu (2e).

Le sens de fermeture (Dc) est également parallèle à l'axe longitudinal (X) et permet le déroulement de la couverture et son déploiement au-dessus de la surface à couvrir (3). La translation du tambour dans le sens de fermeture (Dc) est entrainée par la rotation du même moteur (M) ou de la même manivelle que pour le sens d'ouverture (Do) en faisant tourner un axe de fermeture (11) et première et seconde bobine de fermeture (1b) montée à rotation au premier et second châssis (23) et permettant d'enrouler autour des bobines de fermeture (1b) premier et second cordons de fermeture (1c) comprenant chacun une extrémité fixée à la première largeur de la surface à couvrir.

Le système d'insertion (26) est couplé, de préférence rigidement, aux châssis de chaque côté de la surface à couvrir et est configuré, d'une part,
- pour insérer et verrouiller le jonc (9j) dans la rainure de chaque rail lors de la translation dans le sens de fermeture (Dc) du tambour entraînant le déroulement de la couverture et, d'autre part,
- pour déverrouiller et sortir le jonc (9j) de la rainure lors de la translation dans le sens d'ouverture (Do) du tambour entraînant l'enroulement de la couverture.

Le dispositif ne comprend qu'un seul moteur (M) ou manivelle monté sur le premier châssis (23) (et optionnellement un seul moteur (M) ou manivelle monté sur le second châssis (23)). Le moteur (M) du premier châssis (et, optionnellement, du second châssis) est configuré pour faire tourner un axe d'entrainement (10M). L'invention se distingue de l'art antérieur en ce que le dispositif comprend un système d'embrayage configuré pour que le moteur (M) ou manivelle n'entraine la rotation que d'un des axes de fermeture (11) et d'essieu (12) à la fois, en passant entre,
- d'une part, un état d'enclenchement à l'axe d'essieu (12) de sorte à transmettre un mouvement de rotation de l'axe d'entrainement (10M) à l'axe d'essieu (12) pour déplacer le tambour (2t) dans le sens d'ouverture (Do) et,
- d'autre part, un état d'enclenchement à l'axe de fermeture (11) de sorte à transmettre un mouvement de rotation de l'axe d'entrainement (10M) à l'axe de fermeture (11) pour déplacer le tambour (2t) dans le sens de fermeture (Dc).

Dans l'état d'enclenchement à l'axe d'essieu (12), l'axe de fermeture (11) n'est pas entrainé par le moteur (M) pour déplacer le tambour dans le sens de fermeture (Dc). Inversement, dans l'état d'enclenchement à l'axe de fermeture (11), l'axe d'essieu (12) n'est pas entrainé par le moteur (M) pour déplacer le tambour dans le sens d'ouverture (Do).

### MÉCANISME DE TRANSLATION LONGITUDINALE DU TAMBOUR

La seconde extrémité de la couverture (9) est fixée à la seconde largeur de la surface à couvrir. La personne du métier connait différentes manières de fixer une extrémité d'une couverture à une largeur d'une surface et la présente invention n'est pas restreinte par le choix de l'une ou l'autre solution connue dans l'art. La première extrémité de la couverture est fixée à l'essieu (2e) et la couverture est partiellement ou entièrement enroulée autour de l'essieu selon la position de l'essieu par rapport à la seconde largeur. Le tambour (2t) est formé de l'essieu (2e) avec la couverture (9) enroulée autour de l'essieu. L'essieu (2e) est monté à rotation sur premier et second châssis par un axe d'essieu (12). La rotation du tambour dans le sens d'enroulement de la couverture applique une tension sur la portion de couverture déployée au-dessus de la surface et entraine donc la translation du tambour dans le sens d'ouverture (Do) en direction de la seconde largeur. La rotation du tambour dans l'autre sens déroule la couverture se trouvant sur l'essieu, mais ne permet pas de déplacer le tambour (2t).

Un mécanisme différent est donc nécessaire pour entrainer le déplacement du tambour dans le sens de fermeture (Dc). On utilise deux cordons de fermeture (1c).

### Système de fermeture avec cordons de fermeture (1c) fixes

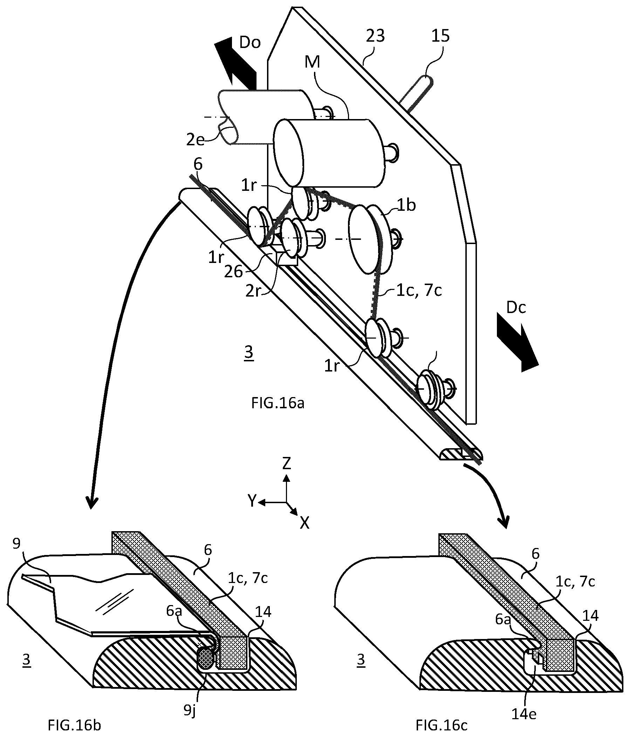

Dans une première variante de l'invention illustrée aux Figures 1a et 16a, chaque cordon de fermeture (1c) s'étend le long de chaque rail et les deux extrémités de chaque cordon de fermeture (1c) sont fixées à un coin de la surface, de préférence aux extrémités de chaque rail (6). Chaque cordon de fermeture (1c) s'étend le long de chaque rail, de préférence inséré dans la rainure du rail (6) correspondant en amont et en aval du tambour (2t). Une poulie de renvoi (1r) positionné à une extrémité du châssis (23) correspondant sort le cordon de fermeture (1c) de la rainure et le guide vers une bobine de fermeture (1b) fixée à rotation sur chacun des premier et second châssis (23) et configurée pour tourner avec l'axe de fermeture (11). Le cordon de fermeture (1c) coiffe la circonférence de la bobine de fermeture sur une distance suffisante pour éviter tout glissement du cordon de fermeture sur la bobine de fermeture lors de la rotation de cette dernière. Comme illustré aux Figures 16a à 16c, le cordon de fermeture (1c) est de préférence cranté et la jante de la bobine de fermeture est de préférence également crantée afin de former un système de crémaillère. De manière alternative, le cordon de fermeture (1c) et la jante de la bobine de fermeture ont une surface structurée augmentant les forces de frictions entre les deux et évitant le glissement de l'un par rapport à l'autre. Le cordon de fermeture (1c) a donc une portion qui sort de la rainure des rails (6) et coiffe la bobine de fermeture (1b) au niveau des châssis, formant une onde ou une vague qui se déplace avec les châssis (23).

Un système de translation semblable -mais différent-- est décrit dans WO2010054960, avec les différences que le moteur ou manivelle ne permet pas d'activer spécifiquement la rotation de l'axe d'essieu et qu'il est donc nécessaire d'installer un ressort de torsion dans l'essieu (2e) pour activer la rotation de l'axe d'essieu lors du déplacement du tambour dans le sens d'ouverture (Do) afin de ramasser la couverture. La présente invention permet d'omettre le ressort de torsion en activant spécifiquement la rotation de l'axe d'essieu (2e) lorsque le système d'embrayage est en état d'enclenchement à l'axe d'essieu (12).

Le tambour (2t) peut donc ainsi être déplacé dans les deux sens de fermeture (Dc) et d'ouverture (Do) de la manière suivante. Dans le sens de fermeture (Dc), le système d'embrayage est dans l'état d'enclenchement à l'axe de fermeture (11). La rotation de l'axe de fermeture (11) entrainée par le moteur (M) ou manivelle entraine la rotation des roues de fermeture qui « roulent » (sans glissement) le long des cordons de fermeture (1c) correspondants. Dans le sens d'ouverture (Do), le système d'embrayage est dans l'état d'enclenchement à l'axe d'essieu (12). La rotation de l'axe d'essieu entrainée par le moteur (M) ou manivelle entraine l'enroulement de la couverture (9). La traction sur la portion de couverture (9) recouvrant la surface tire le tambour (2t) vers la seconde largeur dans le sens d'ouverture (Do). La bobine de fermeture (1b) peut tourner librement en « roulant » le long du cordon de fermeture (1c).

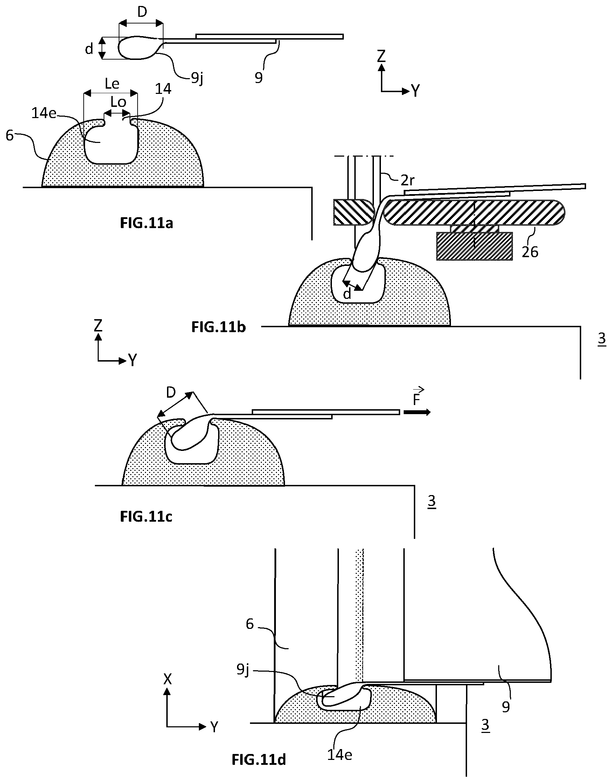

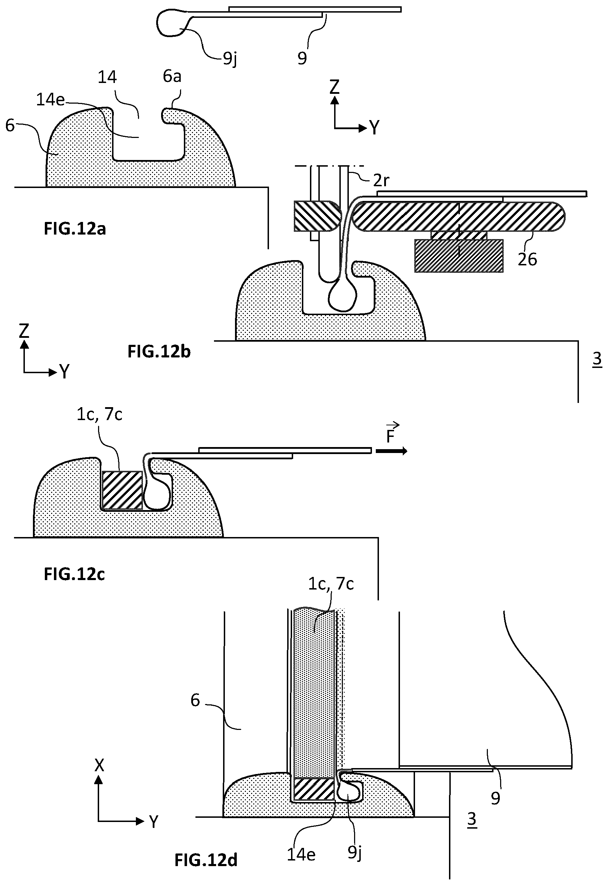

Cette variante de système de translation de la présente invention est avantageuse car elle cumule les fonctions de translation du tambour (2t) et de verrouillage du jonc (9j) dans l'espace (14e) de la rainure du rail correspondant comme illustré aux Figures 12a à 12d. La force de verrouillage obtenue par ce moyen est supérieure à celle qu'on peut obtenir avec un verrouillage du jonc (9j) seul, comme illustré aux Figures 11a à 11d. Comme montré aux Figures 12a à 12d et 16a à 16c, lors du déplacement du tambour dans le sens de fermeture (Dc), le cordon de fermeture (1c) est inséré dans la rainure en aval du système d'insertion (2r, 26) qui insert le jonc (9j) dans la rainure, obstruant ainsi l'ouverture (14) et coinçant le jonc (9j) dans l'espace (14e) sous l'aile (6a), sans possibilité pour le jonc (9j) de sortir sans retirer d'abord le cordon de fermeture (1c). La force de verrouillage ainsi obtenue est très élevée.

Un ature avantage de cette variante est que la bobine de fermeture (1b) étant coiffée par le cordon de fermeture (1c) ne peut tourner librement lorsque le système d'embrayage est dans l'état d'enclenchement à l'axe d'essieu (12). Un système de freinage (19) discuté plus loin, n'est donc pas nécessaire pour la bobine de fermeture (1b).

### Système de fermeture avec enroulement de cordons de fermeture (1c)

Dans une seconde variante de l'invention illustrée aux Figures 1b, 8a, 10a, 10b et 17a chaque cordon de fermeture (1c) est fixé à un coin de la première largeur de la surface (c'est-à-dire la largeur opposée à la seconde largeur à laquelle est fixée une extrémité de la couverture), de préférence à l'extrémité de chaque rail (6). L'autre extrémité de chaque cordon de fermeture (1c) est fixée à la bobine de fermeture (1b) fixée à rotation sur chacun des premier et second châssis (23). Les roues de fermeture sont fixées à un axe de fermeture (11) parallèle à l'axe transversal (Y). La rotation des roues de fermeture entrainant l'enroulement de chaque cordon de fermeture (1c) applique une tension sur la portion de cordon de fermeture entre la bobine de fermeture (1b) et l'extrémité du cordon correspondant fixé à la première largeur, entrainant ainsi la translation du tambour dans le sens de fermeture (Dc) en direction de la première largeur de la surface (3). Ce mouvement de translation entraine automatiquement le déroulement de la couverture (9) du tambour. Il n'est donc pas nécessaire d'activer la rotation de l'axe d'essieu (12) lorsque le tambour se déplace dans le sens de fermeture (Dc). De manière similaire, lorsque le tambour se déplace dans le sens d'ouverture (Do), les cordons de fermeture (1c) se déroulent spontanément des bobines de fermeture (1b). Il n'est donc pas nécessaire d'activer la rotation de l'axe de fermeture (11) lorsque le tambour se déplace dans le sens d'ouverture (Do).

Il suffit donc d'entrainer la rotation de l'axe de fermeture (11) pour déplacer le tambour dans le sens de fermeture (Dc) et recouvrir la surface (3) de la couverture (9). Pour retirer la couverture (9) de la surface (3) il suffit d'entrainer la rotation de l'axe d'essieu (12). Dans WO2023011789, il est proposé d'activer la rotation de l'axe de fermeture (11) par un premier moteur et l'axe d'essieu par un second moteur. Comme discuté supra, lorsqu'un des deux moteurs est activé, l'autre moteur, qui n'est pas activé, offre une résistance substantielle car il ne tourne pas en roue libre. Ceci obige le moteur activé de fournir un plus gros effort et dans beaucoup de cas exige un surdimensionnement des moteurs.

La présente invention propose d'utiliser un système d'embrayage permettant à un moteur unique d'activer la rotation uniquement de l'un des axes de fermeture (11) et d'essieu (12) à la fois. Outre l'économie de l'achat et installation d'un second moteur, cette solution a l'avantage que le moteur ne doit pas compenser la résistance à la rotation d'un second moteur, permettant ainsi de dimensionner le moteur aux dimensions du dispositif uniquement, sans le surdimensionner pour compense la présence du second moteur.

### SYSTÈME D'EMBRAYAGE

Le système d'embrayage de la présente invention permet à un moteur (M) ou manivelle (non illustrée) unique d'activer la rotation de l'un seulement des axes de fermeture (11) et d'essieu (12) à la fois. Le système d'embrayage est configuré pour passer alternativement entre un état d'enclenchement à l'axe d'essieu (12) et un état d'enclenchement à l'axe de fermeture (11). Dans l'état d'enclenchement à l'axe d'essieu (12), le mouvement de rotation de l'axe d'entrainement (10M) entraine un mouvement de rotation à l'axe d'essieu (12) pour déplacer le tambour (2t) dans le sens d'ouverture (Do). Dans l'état d'enclenchement à l'axe de fermeture (11) le mouvement de rotation de de l'axe d'entrainement (10M) entraine un mouvement de rotation à l'axe de fermeture (11) pour déplacer le tambour (2t) dans le sens de fermeture (Dc). Plusieurs variantes de systèmes d'embrayage sont envisagées. Le système d'embrayage peut par exemple comprendre un ou plusieurs des éléments suivants,
- une courroie (11c, 12c) reliant l'axe d'entrainement (10M) aux axes de fermeture (11) et d'essieu (12),
- une roulette d'enclenchement de fermeture (101r) et une roulette d'enclenchement d'essieu (102r) mobiles configurées pour appliquer alternativement une pression sur la courroie de fermeture (11c) et d'essieu (12c) contre la roue de fermeture (11r) et la roue d'essieu (12r), respectivement,
- un système pour déplacer l'axe d'entrainement pour se rapprocher de l'un des axes de fermeture (11) et d'essieu (12) en s'éloignant de l'autre,
- une roulette d'enclenchement (13r) mobile permettant d'alternativement établir un contact mécanique entre l'axe d'entrainement (10M) et les axes de fermeture (11) et d'essieu (12).

Dans une variante préférée, le moteur (M) ou la manivelle tourne toujours dans le même sens que ce soit pour actionner la translation du tambour (2t) dans le sens d'ouverture (Do) que de fermeture (Dc). Il suffit pour cela d'enrouler dans le sens correspondant les cordons de fermeture (1c) autour de la bobine de fermeture (1b) et la couverture (9) autour de l'essieu (2e), à l'aide de poulies de renvoi (1r, 2r) positionnées adéquatement. Il est bien entendu possible de faire tourner le moteur (M) ou la manivelle dans des sens de rotation différents selon qu'on déplace le tambour dans le sens de fermeture (Dc) ou d'ouverture (Do) en inversant le sens d'enroulement d'un des couverture (9) ou cordons de fermeture (1c) autour de l'essieu (2e) ou de la bobine de fermeture (1b), respectivement.

### Système d'embrayage avec courroies (11c, 12c)

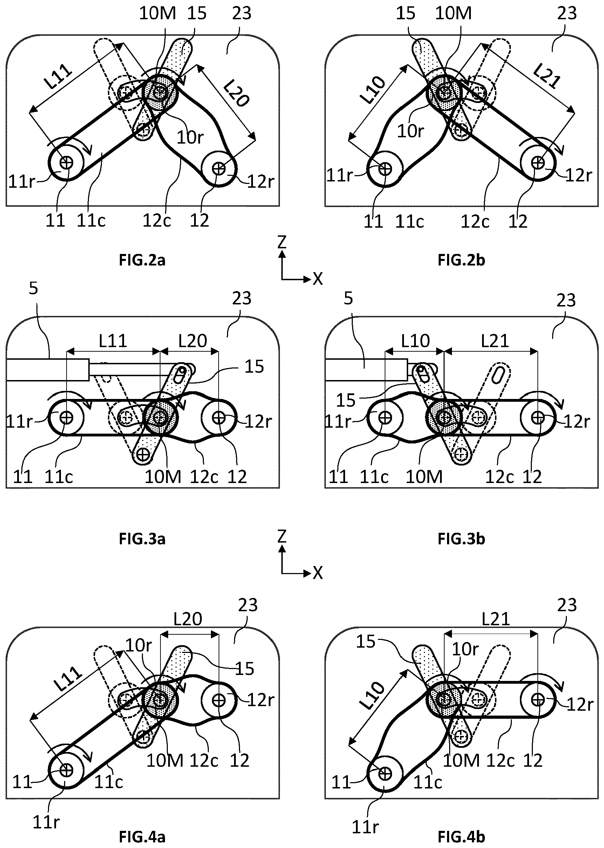

Dans une variante de l'invention, illustrée dans les Figures 2 à 5, 8b, 9 et 10, le système d'embrayage comprend,
- une roue de fermeture (11r) configurée pour tourner avec l'axe de fermeture (11), une roue d'essieu (12r) configurée pour tourner avec l'axe d'essieu (12) et un système d'entrainement (10r) comprenant une première et seconde roue d'entrainement (10M1, 10M2) coaxiales à, et configurée pour tourner avec l'axe d'entrainement (10M),
- une courroie de fermeture (11c) formant une boucle fermée reliant la première roue d'entrainement (10M1) à la roue de fermeture (11r) et une courroie d'essieu (12c) formant une boucle fermée reliant la seconde roue d'entrainement (10M2) à la roue d'essieu(12).

Dans l'état d'enclenchement à l'axe de fermeture (11) (i.e., pour déplacer le tambour dans le sens de fermeture (Dc)), la courroie de fermeture (11c) est, selon les variantes, partiellement ou entièrement tendue, de sorte que la rotation de la première roue d'entrainement (10M1) entraine la rotation de la roue de fermeture (11r), alors que la courroie d'essieu (12c) est détendue et ne transmet pas le mouvement de la rotation de la seconde roue d'entrainement (10M2) à l'axe d'essieu (12). Inversement, dans l'état d'enclenchement à l'axe d'essieu (12) (i.e., pour déplacer le tambour dans le sens d'ouverture (Do)), la courroie d'essieu (12c) est, selon les variantes, partiellement ou entièrement tendue, de sorte que la rotation de la seconde roue d'entrainement (10M2) entraine la rotation de la roue d'essieu (12r), alors que la courroie de fermeture (11c) est détendue et ne transmet pas le mouvement de la rotation de la première roue d'entrainement (10M1) à l'axe de fermeture (11).

L'utilisation de courroies (11c, 12c) pour alternativement transmettre le mouvement de rotation de l'axe d'entrainement (10M) aux axes de fermeture (11) et d'essieu (12) est avantageux en ce qu'elle permet une grande liberté dans le positionnement des différents axes (10M, 11, 12) sur le premier châssis (23). Les Figures 2a&2b à 4a&4b montrent trois exemples de positionnements différents des axes de fermeture (11) et d'essieu (12) relatifs à la position de l'axe d'entrainement (10M).

### Système d'embrayage avec courroies (11c, 12c) avec roulettes d'enclenchement de fermeture (101r) et d'essieu (102r) mobiles

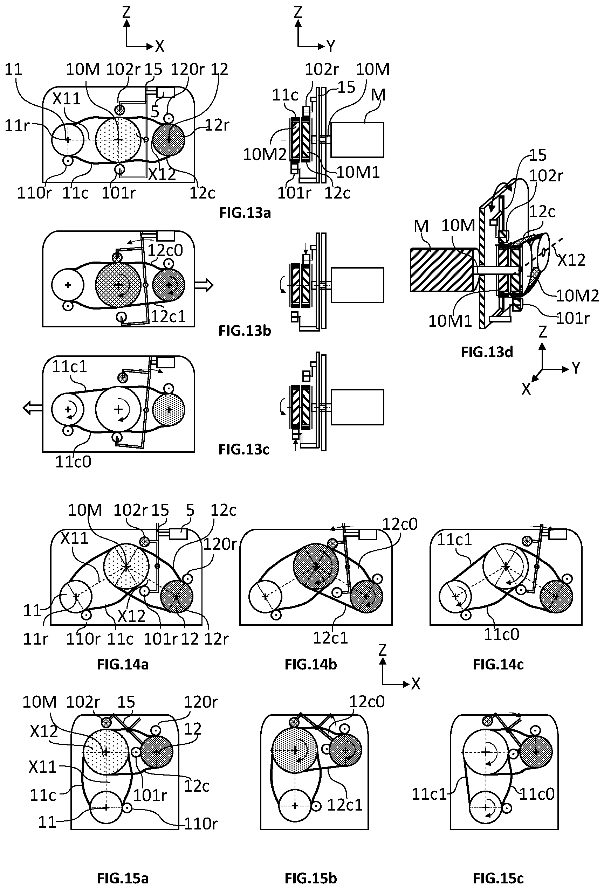

Dans une première variante avec courroies (11c, 12c), illustrée dans les Figures 13a à 13d, 14a à 14c et 15a à 15c, le système d'embrayage comprend,
- une roulette de fermeture (110r) appliquant une pression sur la courroie de fermeture (11c) contre la roue de fermeture (11r),
- une roulette d'essieu (120r) appliquant une pression sur la courroie d'essieu (12c) contre la roue d'essieu (12r) et
- une roulette d'enclenchement de fermeture (101r) et une roulette d'enclenchement d'essieu (102r) montées sur une structure configurée pour déplacer la roulette d'enclenchement de fermeture (101r) et la roulette d'enclenchement d'essieu (102r) entre l'état d'enclenchement à l'axe de fermeture (11) et l'état d'enclenchement à l'axe d'essieu (12), comme expliqué plus bas.

Dans cette première variante, les axes d'entrainement (10M), de fermeture (11) et d'essieu (12) sont à des positions fixes relatives au premier châssis (23). Les courroies de fermeture (11c) et d'essieu (12c) ont une longueur configurée pour coiffer avec peu ou pas de frottement la première roue d'entrainement (10M1) à la roue de fermeture (11r) et la seconde roue d'entrainement (10M2) à la roue d'essieu (12r), de sorte que ni l'une ni l'autre n'est tendue. La courroie de fermeture (11c) est cependant pincée entre la jante de la roue de fermeture (11r) et la roulette de fermeture (110r) qui est montée à rotation sur le premier châssis (23) à une position définie plus bas. De manière similaire, la courroie d'essieu (12c) est pincée entre la jante de la roue d'essieu (12r) et la roulette d'essieu (120r) qui est également montée à rotation, sur le premier châssis (23) à une position définie plus bas.

De préférence, les roulettes d'enclenchement de fermeture (101r) et d'enclenchement d'essieu (102r) sont montées sur une structure rigide, montée à rotation sur le premier châssis (23) de sorte que la rotation de la structure rigide permette de déplacer simultanément les roulettes d'enclenchement de fermeture (101r) et d'enclenchement d'essieu (102r) entre,
- une position définissant l'état d'enclenchement à l'axe de fermeture (11) illustrée aux Figures 13c à 15c, dans laquelle la courroie de fermeture (11c) est pincée entre la jante de la première roue d'entrainement (10M1) et la roulette d'enclenchement de fermeture (101r), alors que la roulette d'enclenchement d'essieu (102r) ne contacte pas (ou avec peu de force) la courroie d'essieu (12c) et
- une position définissant l'état d'enclenchement à l'axe d'essieu (12) illustrée aux Figures 13b à 15b, dans laquelle la courroie d'essieu (12c) est pincée entre la jante de la seconde roue d'entrainement (10M2) et la roulette d'enclenchement d'essieu (102r), alors que la roulette d'enclenchement de fermeture (101r) ne contacte pas (ou avec peu de force) la courroie de fermeture (11c).

Les Figures 13a à 15a illustrent la position de la structure définissant un état de stand-by, dans laquelle aucune des roulettes d'enclenchement de fermeture (101r) et d'enclenchement d'essieu (102r) ne contacte (ou avec peu de force) les courroies de fermeture (11c) et d'essieu (12c), respectivement. La Figure 13d montre en perspective l'alignement de la roulette d'enclenchement de fermeture (101r) avec la première roue d'entrainement (10M1) et de la roulette d'enclenchement d'essieu (102r) avec la seconde roue d'entrainement (10M2).

Dans l'état d'enclenchement à l'axe de fermeture (11) illustrée aux Figures 13c, 14c et 15c, la courroie de fermeture (11c) est pincée, d'une part, entre la roue de fermeture (11r) et la roulette de fermeture (101r) et, d'autre part, entre la première roue d'entrainement (10M1) et la roulette d'enclenchement de fermeture (110r), divisant la courroie de fermeture (11c) en une section lâche (11c0) et une section tendue (11c1). La section tendue (11c1) de la courroie de fermeture (11c) est la section comprenant la portion de courroie située en aval de la première roue d'entrainement (10M1), où le terme « aval » est défini relatif au sens de rotation de la première roue d'entrainement (10M1). C'est la section tendue (11c1) qui va transférer le mouvement de rotation de la première roue d'entrainement (10M1) à la roue de fermeture (11r). Il est donc important de maximiser la surface de contact entre la section tendue (11c1) et les jantes de la première roue d'entrainement (10M1) et de la roue de fermeture (11). Pour cette raison, la section tendue (11c1) a de préférence une longueur supérieure à celle de la section lâche (11c0) et coiffe un maximum de la circonférence de chacune de la première roue d'entrainement (10M1) et de la roue de fermeture (11r).

Par exemple, si l'axe d'entrainement (10M) et l'axe de fermeture (11) sont alignés le long d'un axe X11, la roulette d'enclenchement de fermeture (101r) peut pincer la courroie de fermeture (11c) contre la jante de la première roue d'entrainement (10M1) au niveau du diamètre de la première roue d'entrainement (10M1) qui est perpendiculaire à l'axe X11. De manière similaire, la roulette de fermeture (110r) peut appuyer sur la courroie de fermeture (11c) contre la roue de fermeture (11r) au niveau du diamètre de celle-ci qui est perpendiculaire à l'axe X11. De cette façon, la section tendue (11c1) de la courroie de fermeture (11c) coiffe environ la moitié de la circonférence de chacune de la première roue d'entrainement (10M1) et de la roue de fermeture (11r). De cette façon, la surface de contact entre la section tendue (11c1) et chacune des roues (10M1, 11r) qu'elle coiffe est maximisée, optimisant ainsi le transfert de mouvement de rotation de la première roue d'entrainement (10M1) à la roue de fermeture (11r). Il est clair que les roulettes d'enclenchement de fermeture (101r) et de fermeture (110r) peuvent appuyer sur la jante légèrement en amont ou en aval des diamètres correspondants qui sont perpendiculaires à l'axe X11, mais ces diamètres donnent une bonne indication des positions optimales des deux roulettes (101r, 110r). Par exemple, les roulettes (101r, 110r) peuvent de préférence pincer la courroie de fermeture (11c) dans une zone comprise à ±10°, de préférence ±5° autour du point d'intersection des jantes avec des diamètres correspondants perpendiculaires à l'axe X11. Les Figures 13a à 15a identifient les axes X11 et X12 et les diamètres des différentes roues (10M1, 10M2, 11r, 12r) perpendiculaires à ces axes pour différents alignements des axes d'entrainement (10M), de fermeture (11) et d'essieu (12). Les Figures 13b à 15b et 13c à 15c montrent les roulettes d'enclenchement d'essieu (102r) et de fermeture (101r) appliquent une force sur la jante des seconde et première roue d'entrainement (10M2, 10M1) aux points d'intersection avec les diamètres perpendiculaires aux axes X12 et X11, respectivement.

Dans l'état d'enclenchement à l'axe de fermeture (11), la section tendue (11c1) de la courroie de fermeture (11c) enveloppe une portion de la circonférence de la première roue d'entrainement (10M1) à partir de la roulette d'enclenchement de fermeture (101r) et enveloppe une portion de la circonférence de la roue de fermeture (11r) jusqu'à la roulette de fermeture (110r). Lorsque la première roue d'entrainement (10M1) est mise en rotation par le moteur (M) ou la manivelle, le mouvement de rotation est transmis par friction à la section tendue (11c1) de la courroie de fermeture (11c) qui transmet à son tour ce mouvement de rotation à la roue de fermeture (11r). Comme la roulette d'enclenchement d'essieu (102r) n'applique pas (ou peu) de force contre la seconde roue d'entrainement (10M2), la courroie d'essieu (12c) est lâche sur toute sa longueur et ne transmet pas le mouvement de rotation de la seconde roue d'entrainement (10M2) (synchrone avec la première roue d'entrainement (10M1)) à la roue d'essieu (12r).

De manière analogue dans l'état d'enclenchement à l'axe d'essieu (12) illustrée aux Figures 13bn 14b et 15b, la courroie d'essieu (12c) est pincée, d'une part, entre la roue d'essieu (12r) et la roulette d'essieu (102r) et, d'autre part, entre la seconde roue d'entrainement (10M2) et la roulette d'enclenchement d'essieu (120r), divisant la courroie d'essieu (12c) en une section lâche (12c0) et une section tendue (12c1). La section tendue (12c1) de la courroie d'essieu (12c) est la section comprenant la portion de courroie située en aval de la seconde roue d'entrainement (10M2), où le terme « aval » est défini relatif au sens de rotation de la seconde roue d'entrainement (10M2). C'est la section tendue (12c1) qui va transférer le mouvement de rotation de la seconde roue d'entrainement (10M2) à la roue d'essieu (12r). Il est donc important de maximiser la surface de contact entre la section tendue (12c1) et les jantes de la seconde roue d'entrainement (10M2) et de la roue d'essieu (12). Pour cette raison, la section tendue (12c1) a de préférence une longueur supérieure à celle de la section lâche (12c0) et coiffe un maximum de la circonférence de chacune de la seconde roue d'entrainement (10M2) et de la roue d'essieu (12r).

Par exemple, si l'axe d'entrainement (10M) et l'axe d'essieu (12) sont alignés le long d'un axe X12, la roulette d'enclenchement de fermeture (102r) peut pincer la courroie d'essieu (12c) contre la jante de la seconde roue d'entrainement (10M2) au niveau du diamètre de la seconde roue d'entrainement (10M2) qui est perpendiculaire à l'axe X12. De manière similaire, la roulette d'essieu (120r) peut appuyer sur la courroie d'essieu (12c) contre la roue d'essieu (12r) au niveau du diamètre de celle-ci qui est perpendiculaire à l'axe X12. De cette façon, la section tendue (12c1) de la courroie d'essieu (12c) coiffe environ la moitié de la circonférence de chacune de la seconde roue d'entrainement (10M2) et de la roue d'essieu (12r). De cette façon, la surface de contact entre la section tendue (12c1) et chacune des roues (10M2, 12r) qu'elle coiffe est maximisée, optimisant ainsi le transfert de mouvement de rotation de la seconde roue d'entrainement (10M2) à la roue d'essieu (12r). Il est clair que les roulettes d'enclenchement d'essieu (102r) et d'essieu (120r) peuvent appuyer sur la jante légèrement en amont ou en aval des diamètres correspondants qui sont perpendiculaires à l'axe X12, mais ces diamètres donnent une bonne indication des positions optimales des deux roulettes (102r, 120r). Par exemple, les roulettes (102r, 120r) peuvent de préférence pincer la courroie d'essieu (12c) contre la jante des roues correspondantes dans une zone comprise à ±10°, de préférence ±5° autour du point d'intersection des jantes avec les diamètres correspondants perpendiculaires à l'axe X12.

Dans l'état d'enclenchement à l'axe d'essieu (12), la section tendue (12c1) de la courroie d'essieu (12c) enveloppe une portion de la circonférence de la seconde roue d'entrainement (10M2) à partir de la roulette d'enclenchement de fermeture (102r) et enveloppe une portion de la circonférence de la roue d'essieu (12r) jusqu'à la roulette d'essieu (120r). Lorsque la seconde roue d'entrainement (10M2) est mise en rotation par le moteur (M) ou la manivelle, le mouvement de rotation est transmis par friction à la section tendue (12c1) de la courroie d'essieu (12c) qui transmet à son tour ce mouvement de rotation à la roue d'essieu (12r). Comme la roulette d'enclenchement de fermeture (101r) n'applique pas (ou peu) de force contre la première roue d'entrainement (10M1), la courroie de fermeture (11c) est lâche sur toute sa longueur et ne transmet pas le mouvement de rotation de la première roue d'entrainement (10M1) (synchrone avec la seconde roue d'entrainement (10M2)) à la roue de fermeture (11r).

Ce système d'embrayage est avantageux pour les raisons suivantes.
- La force à appliquer par la roulette d'enclenchement de fermeture (101r) et d'essieu (102r) contre les courroies (11c, 12c) et roues correspondantes (10M1, 10M2, 11r, 12r) est faible, à peine quelques N, par exemple, entre 20 à 20 N, de préférence entre 50 et 100 N.
- Le mouvement de la structure nécessaire pour passer entre l'état d'enclenchement à l'axe de fermeture et à l'axe d'essieu est de faible amplitude. Le système peut être équipé d'un simple vérin (5) pour passer entre les états d'enclenchement aux axes de fermeture (11) et d'essieu (12).
- Ce système n'est pas affecté par les variations dans le temps de la longueur des courroies (11c, 12c), qui peut varier par fluage ou à cause de variations de température, puisque la section tendue est formée par les roulettes (101r, 102r, 110r, 120r) respectives.
- Comme les roulettes de fermeture (110r) et d'essieu (120r) appliquent constamment une légère pression sur les roue de fermeture (11r) et d'essieu (12r), ces dernières n'ont pas besoin d'un système de freinage (19) tel que discuté plus bas car elles ne peuvent pas tourner hors de contrôle lorsqu'elles sont en roue libre (i.e., non couplées à la première ou seconde roue d'entrainement (10M1, 10M2)).

### Système d'embrayage avec courroies (11c, 12c) avec axe d'entrainement (10M) mobile

Dans une seconde variante avec courroies (11c, 12c), illustrée dans les Figures 2a&2b à 4a&4b, l'axe d'entrainement (10M) est mobile et permet d'alternativement passer entre l'état d'enclenchement à l'axe de fermeture et et l'état d'enclenchement à l'axe d'essieu. Les Figures 2a, 3a et 4a illustrent des exemples d'une telle variante dans l'état d'enclenchement à l'axe de fermeture (11) alors que les Figures 2b, 3b et 4b montrent les mêmes exemples dans l'état d'enclenchement à l'axe d'essieu (12).

Dans cette première variante, l'axe d'entrainement (10M) est configuré pour être déplacé pour varier une première distance le séparant de l'axe de fermeture (11) entre une première distance d'enclenchement (L11) et une première distance de désenclenchement (L10), et pour simultanément varier une seconde distance le séparant de l'axe d'essieu (12) entre une seconde distance de désenclenchement (L20) et une seconde distance d'enclenchement (L21). Comme on le voit sur les Figures 2a&2b à 4a&4b, la variation des distances (L10, L11, L20, L21) séparant l'axe d'entrainement des axes de fermeture (11) et d'essieu permet de tendre l'une des deux courroies de fermeture ou d'essieu (11c, 12c) alors que l'autre des deux courroies est détendue.

Lorsque l'axe d'entrainement (10M) se trouve à la seconde distance d'enclenchement (L21) de l'axe d'essieu (12), il se trouve à la première distance de désenclenchement (L10) de l'axe de fermeture (11) et la courroie d'essieu (12c) est tendue alors que la courroie de fermeture (11c) est détendue. L'axe d'entrainement entraine alors la rotation uniquement de la roue d'essieu (12r) et de l'axe d'essieu (12), entrainant ainsi le déplacement du tambour (2t) dans le sens d'ouverture (Do). A l'inverse, lorsque l'axe d'entrainement (10M) se trouve à la première distance d'enclenchement (L11) de l'axe de fermeture (11), il se trouve à la seconde distance de désenclenchement (L20) de l'axe d'essieu (12) et la courroie de fermeture (11c) est tendue alors que la courroie d'essieu (12c) est détendue. L'axe d'entrainement (10M) entraine alors la rotation uniquement de la roue de fermeture (11r) et de l'axe de fermeture (11), entrainant ainsi le déplacement du tambour (2t) dans le sens d'ouverture (Do).

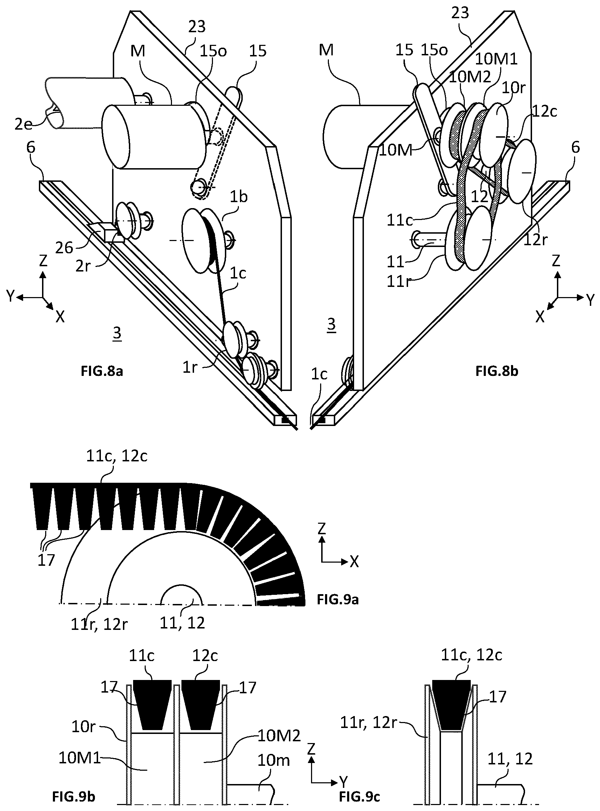

L'axe d'entrainement (10M) peut être déplacé en le translatant linéairement entre ses positions d'enclenchement à l'axe de fermeture et à l'axe d'essieu. Tel qu'illustré aux Figures 8a, 8b et 17a, il est cependant préféré de monter le moteur (M) et l'axe d'entrainement (10M) sur un levier (15) monté sur un axe de rotation sur le premier châssis (23). En faisant pivoter le levier (15) autour de son axe de rotation, le moteur (M) et l'axe d'entrainement sont amenés aux positions d'enclenchement des axes de fermeture et d'essieu. Si le moteur (M) se trouve sur la face opposée des roues d'entrainement (10r), de fermeture (11r) et d'essieu (12r), l'axe d'entrainement (10M) passe à travers une ouverture de levier (15o) percée à travers le premier châssis (23). Dans le cas d'une manivelle, l'ouverture de levier ne sera généralement pas nécessaire.

Le levier (15) peut être rendu accessible à un opérateur, par exemple en s'étendant au-delà d'un périmètre du châssis (23), afin de permettre de l'actionner manuellement. Dans une variante plus sophistiquée, le levier (15) peut être couplé à un vérin (5) électrique ou pneumatique, tel qu'illustré aux Figures 3a et 3b. Il est important que le levier (15) puisse être verrouillé à chacune de ses positions d'enclenchement aux axes de fermeture et d'essieu afin de ne pas bouger lors du déplacement du tambour. Si un vérin est utilisé, il suffit de bloquer le vérin. Dans une variante manuelle, il est préférable de prévoir un système de blocage quelconque, tel qu'un évidement dans lequel viendrait se loger de manière réversible le levier en fin de course.

### Système d'embrayage avec courroies (11c, 12c) avec roulette d'enclenchement (13r)

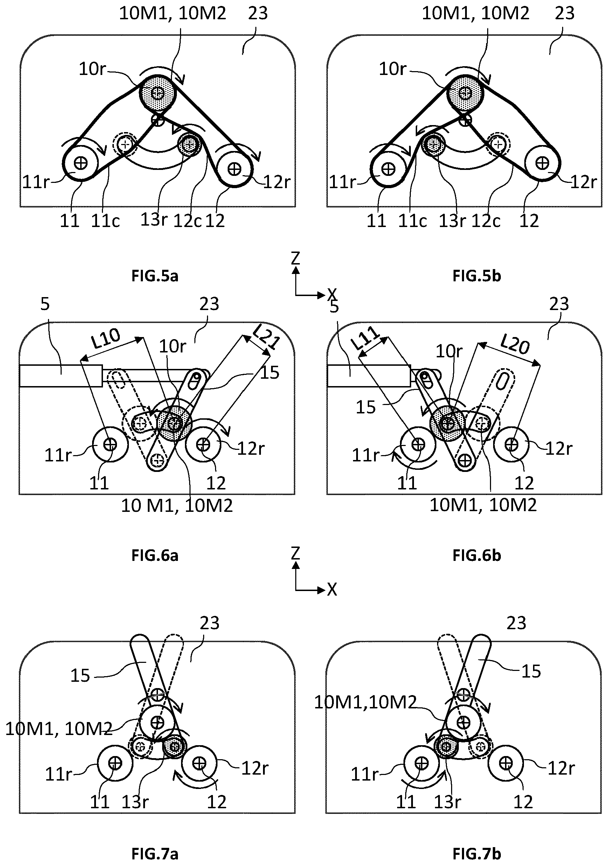

Dans une troisième variante avec courroies (11c, 12c), illustrée dans les Figures 5a et 5b, l'axe d'entrainement (10M) est fixe. Le système d'embrayage comprend une roulette d'enclenchement (13r) mobile permettant de passer alternativement entre l'état d'enclenchement à l'axe d'essieu (12) (cf. Figure 5a) et d'enclenchement à l'axe de fermeture (11) (cf. Figure 5b) .

Dans cette variante, les axes d'entrainement (10M), de fermeture (11) et d'essieu (12) sont à des positions relatives fixes entre eux et séparés les uns des autres de sorte que les courroies de fermeture et d'essieu (11c, 12c) sont toutes deux détendues. Le système de débrayage comprend de plus une roulette d'enclenchement (13r) reliée à un axe mobile, parallèle aux axes d'entrainement (10M), de fermeture (11) et d'essieu (12). Comme illustré aux Figures 5a et 5b, l'axe de la roulette d'enclenchement (13r) est mobile en ce qu'il peut être déplacé entre
- une première position d'enclenchement dans laquelle la roulette d'enclenchement (13r) appuie sur la courroie de fermeture (11c) la tendant entre la roues d'entrainement (10r) et la roue de fermeture (11r) définissant ainsi l'état d'enclenchement à l'axe de fermeture (11) et
- une seconde position d'enclenchement dans laquelle la roulette d'enclenchement (13r) appuie sur la courroie d'essieu (12c) la tendant entre la roues d'entrainement (10r) et la roue d'essieu (12r) définissant ainsi l'état d'enclenchement à l'axe d'essieu (12).

La roulette d'enclenchement (13r) peut être déplacée en la translatant linéairement entre ses première et seconde position d'enclenchement. Alternativement, la roulette d'enclenchement (13r) peut être montée sur un levier (non illustré) monté sur un axe de rotation sur le premier châssis (23). En faisant pivoter le levier autour de son axe de rotation, la roulette d'enclenchement (13r) peut être amenée aux première et seconde position d'enclenchement.

Le déplacement de la roulette d'enclenchement (13r) peut être effectué manuellement par exemple à l'aide d'un levier (15) ou automatiquement à l'aide d'un vérin (non illustrés).

### Système d'embrayage avec axe d'entrainement (10M) mobile et sans courroies

Dans une variante de l'invention illustrée aux Figures 6a&6b et 7a&7b, le système d'embrayage ne comprend pas de courroies. Dans cette variante, le système d'embrayage comprend,
- une roue de fermeture (11r) configurée pour tourner avec l'axe de fermeture (11),
- une roue d'essieu (12r) configurée pour tourner avec l'axe d'essieu (12),
- une roues d'entrainement (10r) configurée pour tourner avec l'axe d'entrainement (10M),

Dans l'exemple illustré dans les Figures 6a&6b, l'axe d'entrainement (10M) est mobile entre une position de fermeture définissant l'état d'enclenchement à l'axe de fermeture (11) et une position d'essieu définissant l'état d'enclenchement à l'axe d'essieu (12). Dans la position de fermeture, la première roue d'entrainement (10M1) est en contact de frottement avec la roue de fermeture (11r) définissant ainsi l'état d'enclenchement à l'axe de fermeture (11) et est séparée de la roue d'essieu (12r). A l'inverse, dans la position d'essieu, la seconde roue d'entrainement (10M2) est en contact de frottement avec la roue d'essieu (12r) définissant ainsi l'état d'enclenchement à l'axe d'essieu (12) et est séparée de la roue de fermeture (11r). Deux roues sont « *en contact de frottement »* si la rotation d'une première roue entraine la rotation de la seconde roue. De préférence, la vitesse angulaire (ω2) de la seconde roue est au moins 95% de la vitesse angulaire (ω1) de la première roue avec des pertes inférieures à 5% du moment de rotation (i.e., |ω2| ≥ 95% |ω1|). Les roues peuvent être de pignons dentés ou des roues sans dent mais avec des jantes adhérentes l'une à l'autre, par exemple avec une structure, ou un haut coefficient de frottement.

Comme dans le système d'embrayage avec axe d'entrainement mobile et deux courroies discuté supra, l'axe d'entrainement (10M) peut être déplacé en le translatant linéairement entre ses positions d'enclenchement à l'axe de fermeture et à l'axe d'essieu. Tel qu'illustré aux Figures 6a et 6b, il est cependant préféré de monter le moteur (M) et l'axe d'entrainement (10M) sur un levier (15) monté sur un axe de rotation sur le premier châssis (23). En faisant pivoter le levier (15) autour de son axe de rotation, le moteur (M) et l'axe d'entrainement sont amenés aux positions de fermeture et d'essieu. Si le moteur (M) se trouve sur la face opposée des roues d'entrainement (10r), de fermeture (11r) et d'essieu (12r), l'axe d'entrainement (10M) passe à travers une ouverture de levier (15o) percée à travers le premier châssis (23). Dans le cas d'une manivelle, l'ouverture de levier ne sera généralement pas nécessaire.

Le levier (15) peut s'étendre au-delà d'un périmètre du châssis (23) afin de permettre de l'actionner manuellement. Dans une variante plus sophistiquée illustrée aux Figures 6a et 6b, le levier (15) peut être couplé à un vérin (5) électrique ou pneumatique. Il est important que le levier (15) puisse être verrouillé à chacune de ses positions de fermeture et d'essieu afin de ne pas bouger lors du déplacement du tambour. Si un vérin est utilisé, il suffit de bloquer le vérin. Dans une variante manuelle, il est préférable de prévoir un système de blocage quelconque, tel qu'un évidement dans lequel viendrait se loger de manière réversible le levier en fin de course.

### Système d'embrayage avec roulette d'enclenchement (13r) et sans courroie

Dans une seconde variante sans courroie, illustrée aux Figures 7a et 7b, dans lequel le système d'embrayage comprend une roue de fermeture (11r), une roue d'essieu (12r), une roue d'entrainement (10r), les axes d'entrainement (10M), de fermeture (11) et d'essieu (12) sont cette fois à des positions relatives fixes entre eux et séparés les uns des autres de sorte que les roues d'entrainement (10r), de fermeture (11r) et d'essieu (12r) ne se touchent pas. Le dispositif comprend de plus une roulette d'enclenchement (13r) reliée à un axe parallèle aux axes d'entrainement (10M), de fermeture (11) et d'essieu (12). L'axe de la roulette d'enclenchement (13r) peut être déplacé entre une position de contact à la roue de fermeture définissant l'état d'enclenchement à l'axe de fermeture et une position de contact à l'essieu définissant l'état d'enclenchement à l'axe d'essieu.

Dans la position de contact à la roue de fermeture illustrée à la Figure 7b, la roulette d'enclenchement (13r) est en contact de frottement avec la première roue d'entrainement (10M1) et la roue de fermeture (11r) formant un système de transmission entre la première roue d'entrainement (10M1) et la roue de fermeture (11r). La roue d'essieu (12r) étant séparée de la seconde roue d'entrainement (10M2), la roue d'essieu (12r) n'est pas activée en rotation par la rotation simultanée des première et seconde roue d'entrainement (10M1, 10M2). Dans la position de contact à l'essieu illustrée à la Figure 7a, la roulette d'enclenchement (13r) est en contact de frottement avec la seconde roue d'entrainement (10M2) et la roue d'essieu (12r) formant un système de transmission entre la seconde roue d'entrainement (10M2) et la roue d'essieu (12r). La roue de fermeture (11r) étant séparée de la première roue d'entrainement (10M1), la roue de fermeture (11r) n'est pas activée en rotation par la rotation de la première roue d'entrainement (10M1).

L'axe de la roulette d'enclenchement (13r) peut être déplacé en le translatant linéairement entre ses positions de contact à la roue de fermeture et à l'essieu. Tel qu'illustré aux Figures 7a et 7b, il est cependant préféré de monter l'axe de la roulette d'enclenchement (13r) sur un levier (15) monté sur un axe de rotation sur le premier châssis (23). En faisant pivoter le levier (15) autour de son axe de rotation, le la roulette d'enclenchement (13r) est amenée aux positions de contact à la roue de fermeture et à l'essieu.

Le levier (15) peut être rendu accessible à un opérateur, par exemple en s'étendant au-delà d'un périmètre du châssis (23), afin de permettre de l'actionner manuellement. Dans une variante plus sophistiquée, le levier (15) peut être couplé à un vérin (5) électrique ou pneumatique (non illustré). Il est important que le levier (15) puisse être verrouillé à chacune de ses positions d'enclenchement aux axes de fermeture et d'essieu afin de ne pas bouger lors du déplacement du tambour. Si un vérin est utilisé, il suffit de bloquer le vérin. Dans une variante manuelle, il est préférable de prévoir un système de blocage quelconque, tel qu'un évidement dans lequel viendrait se loger de manière réversible le levier en fin de course.

Dans les variantes sans courroie décrites supra, les contacts de frottement entre la première ou seconde roue d'entrainement (10M1, 10M2) et les différentes roues de fermeture (11r), d'essieux (12r) ou d'enclenchement (13r) doivent se faire sans glissement, i.e., |ωi| ≥ 95% |ω0|, où ω0 est la vitesse angulaire des première et seconde roue d'entrainement (10M1, 10M2) du système d'entrainement (10r) et ωi est la roue de fermeture (11r), d'essieu (12r) ou d'enclenchement (13r) en contact de frottement avec la première ou seconde roue d'entrainement (10M1, 10M2). Ainsi, les roues d'entrainement (10r), de fermeture (11r), d'essieu (12r) et d'enclenchement (13r) peuvent être des roues dentées (pignons) ou peuvent avoir des surfaces de jantes adhérentes avec un coefficient de frottement élevé. Par exemple, la surface extérieure des jantes peut être structurée et / ou faite d'un matériau élastomère tel qu'un caoutchouc.

### CONTRÔLE DE LA ROTATION DE L'AXE À VIDE

Dans l'état d'enclenchement à l'axe de fermeture, l'axe d'entrainement (10M) actionne la rotation de l'axe de fermeture (11), déplaçant ainsi le tambour (2t) dans le sens de fermeture (Dc). L'axe d'essieu (12) n'est pas actionné en rotation par l'axe d'entrainement (10M) et tourne en roue libre. En effet, même si pas entrainé par l'axe d'entrainement (10M), l'axe d'essieu (12) tourne alors que le tambour (2t) se déplace dans le sens de fermeture (Dc) par la force de traction exercée sur la couverture par son second bord transversal fixé à la seconde largeur de la surface (3).

De même, dans l'état d'enclenchement à l'axe d'essieu, l'axe d'entrainement (10M) actionne la rotation de l'axe d'essieu (12), enroulant la couverture (9) sur le tambour et déplaçant le tambour (2t) dans le sens d'ouverture (Do) par la force exercée sur la couverture par son second bord transversal fixé à la seconde largeur de la surface (3). L'axe de fermeture (11) n'est pas actionné en rotation par l'axe d'entrainement (10M) et tourne en roue libre. En effet, même si pas entrainé par l'axe d'entrainement (10M), l'axe de fermeture (11) tourne alors que le tambour (2t) se déplace dans le sens d'ouverture (Do) par la force de traction exercée sur les cordons de fermeture (1c) par leur extrémité fixé à la seconde largeur de la surface (3).

Il est important de veiller à ce que la rotation en roue libre des axes de fermeture (11) et d'essieu (12) reste sous contrôle, afin d'éviter un emballement de leur rotation avec formation de mou dans la couverture (9) et cordons de fermeture (1c), respectivement, qui pourrait perturber le bon fonctionnement du dispositif.

Alors que le moteur parmi les deux moteurs (M1, M2) décrits dans WO2023011789 qui n'était pas actionné offrait une résistance trop importante à la rotation de l'axe couplé au moteur en action pour un bon fonctionnement du système, aucune résistance à la libre rotation des axes peut, dans certains cas, également être dommageable. Pour cette raison, il peut être nécessaire dans certains cas de freiner de manière contrôlée la libre rotation de l'axe qui n'est pas enclenché. Pour contrôler la libre rotation des roues de fermeture (11) et d'essieu (12), on peut appliquer une force de friction contrôlée afin de les empêcher de tourner trop vite et de former du mou dans les cordons de fermeture (1c) et dans la couverture (9), respectivement. Il existe différentes solutions pour appliquer une force de friction sur les roues lorsqu'elles sont libres (i.e., non enclenchées à l'axe de transmission).

Dans la variante de système d'embrayage illustré aux Figures 13a à 15c, le risque d'emballement en roue libre de la roue de fermeture (11r) ou d'essieu (12) ne se présente pas, car les roulettes de fermeture (110r) et d'essieu (120r) applique une force contre la jante des roues de fermeture (11r) et d'essieu (12r) empêchant une perte de contrôle de la rotation en roue libre. Dans les autres variantes utilisant des courroies de fermeture (11c) et d'essieu (12c), la libre rotation des roues de fermeture (11r) et d'essieu (12r) peut être contrôlée en prévoyant une surface de contact importante entre la courroie et la roue correspondante. Par exemple, comme illustré aux Figures 9a à 9c, les courroies (11c, 12c) peuvent être munies de dents (17) permettant, d'une part, d'augmenter l'épaisseur de la courroie, comme il est visible sur la Figure 9a et, d'autre part, de maintenir la flexibilité nécessaire pour que la courroie coiffe les roues d'entrainement (10r), de fermeture (11r) et d'essieu (12r). Les roues de fermeture (11r) et d'essieu (12c) sont munies de rigoles configurées pour recevoir la courroie correspondante. Comme illustré à la Figure 9c, la géométrie des rigoles épouse la géométrie des dents (17) des courroies créant des forces de friction entre la courroie et les parois de la rigole de chaque roue. Lorsqu'une courroie est détendue dans l'état désenclenché à l'axe correspondant, elle freine la libre rotation de la roue par frottement, évitant ainsi une rotation excessive de la roue désenclenchée. Comme illustré aux Figures 8b et 9b, le système d'entrainement (10r) comprend première et seconde roue d'entrainement (10M1, 10M2) coaxiales à l'axe d'entrainement (10M), configurées pour recevoir la courroie de fermeture (11r) et la courroie d'essieu (12r), respectivement. De préférence, les première et seconde roue d'entrainement (10M1, 10M2) comprennent chacune une rigole pour accommoder sans glissement les courroies de fermeture (11c) et d'essieu (12c). Par exemple, les rigoles peuvent avoir une géométrie offrant moins de frottement aux courroies que les roues de fermeture (11r) et d'essieu (12r) correspondantes, comme par exemple illustré à la Figure 9b comparée à la Figure 9c.

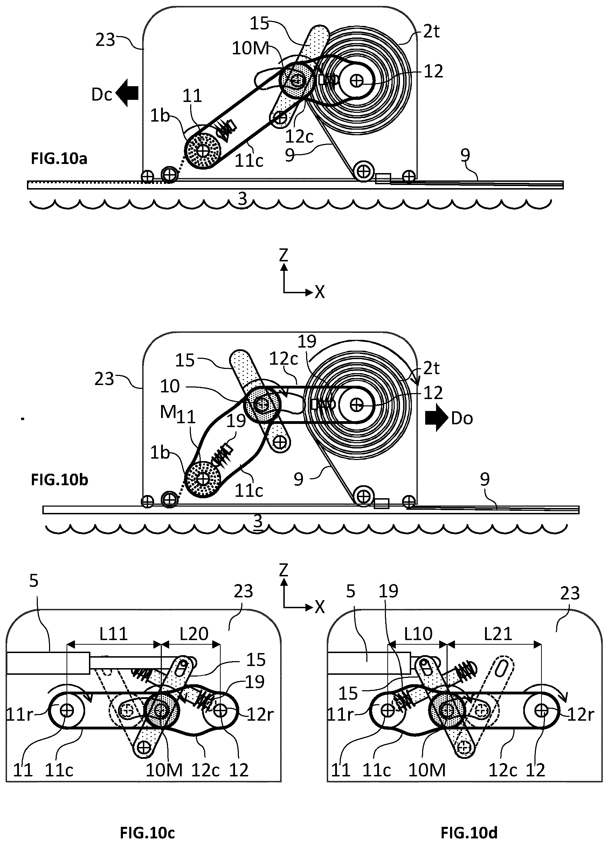

Dans une variante alternative, s'appliquant à des systèmes d'embrayage avec ou sans courroies (11c, 12c), illustrée aux Figures 10a à 10d, le dispositif comprend un frein (19) configuré pour exercer une pression sur la roue, l'axe, ou même la portion de courroie coiffant la roue, configurée pour freiner par friction de manière contrôlée la rotation de la roue libre. De préférence, le frein est monté sur un système résilient permettant de contrôler la pression appliquée. Il est préféré que le frein n'agisse que sur la roue ou l'axe qui est désenclenché et pas sur la roue ou l'axe qui est enclenchée. Si le système d'embrayage comprend un levier (15) pour passer de l'état d'enclenchement à l'axe de fermeture à celui d'enclenchement à l'axe d'essieu, le frein (19) peut être relié mécaniquement au levier (15) de sorte à appliquer la pression ou pas sur une roue selon la position du levier (15), tel qu'illustré aux Figures 10c et 10d.

### VERROUILLAGE DES BORDS LONGITUDINAUX DE LA COUVERTURE (9)

Dans beaucoup d'applications, il est avantageux de verrouiller les bords longitudinaux de la couverture au fur et à mesure qu'elle se déploie. Ceci est particulièrement intéressant dans le cas de piscines, car cela permet d'éviter que des personnes s'engageant sur la couverture ne soient précipitées dans l'eau à travers un espace entre le bord longitudinal de la couverture et la margelle de la piscine. En outre, étanchéifier la zone de contact périphérique entre la couverture et les bords longitudinaux de la surface peut éviter l'introduction dans la piscine de saletés, feuilles mortes et brindilles ainsi que de petits animaux tels que des souris ou des serpents. Cela ouvre aussi la possibilité de pressuriser le volume d'air se trouvant entre la surface de l'eau et la surface inférieure de la couverture, afin de gonfler celle-ci.

Le dispositif de la présente invention comprend un système d'insertion (26) fixé rigidement aux châssis de chaque côté de la surface à couvrir configuré pour qu'une fois inséré dans l'espace (14e) par le système d'insertion, le jonc (9j), d'une part, ne puisse en ressortir par la seule action d'une force (F) appliquée parallèle à l'axe transversal (Y) dans la direction de la surface à couvrir et, d'autre part, puisse en ressortir lors de l'enroulement de la couverture (10) sur le tambour (2) se déplaçant dans le sens d'ouverture (Do) entraînant le retrait de la couverture (9). Des systèmes d'insertion peuvent être implémentés dans la présente invention tels que décrits par exemple dans WO2012171658, WO2023011789, WO2010/010152, WO2010054960 ou WO2014064138.

### Verrouillage du jonc (9j), seul présent dans la rainure

WO2012171658 et WO2023011789 décrit un système d'insertion et de verrouillage du jonc (9j) dans l'ouverture (14) du rail (6) correspondant, avec le jonc occupant seul l'espace (14e). Un exemple d'un tel système est illustré aux Figures 11a à 11d.

Le jonc (9j) peut être continu ou discontinu, i.e., composé d'éléments discrets fixés côte à côte le long du bord longitudinal correspondant. Dans une coupe sur un plan normal au bord longitudinal de la couverture, le jonc (9) a une géométrie allongée définie par un rapport (D / d) d'un premier diamètre (D) à un second diamètre (d) supérieur à l'unité (i.e. D / d > 1), dans lequel le premier diamètre (D) est défini comme la longueur de la ligne droite reliant les deux points les plus éloignés l'un de l'autre du périmètre de la géométrie et le second diamètre (d) est la longueur de la plus longue ligne droite perpendiculaire au premier diamètre (D) qui relie deux points du périmètre. De préférence, le rapport D / d > 1.3, de préférence D / d > 1.5.

Dans une coupe transversale, normale à l'axe longitudinal (X), l'ouverture (14) de la rainure a une largeur maximale (Lo), et l'espace (14e) a une largeur maximale (Le) supérieure à la largeur maximale (Lo) de l'ouverture (14) (Lo < Le), où les largeurs maximales (Lo, Le) sont mesurées parallèles à l'axe transversal (Y). Le jonc (9j) de chaque bord longitudinal et la rainure du rail correspondant sont configurés pour qu'une fois inséré dans l'espace (14e) par le système d'insertion, l'élément en saillie occupant seul l'espace (14e) ne puisse en ressortir par la seule action d'une force (F) appliquée parallèle à l'axe transversal (Y) dans la direction de la surface à couvrir.

Par exemple, dans la variante illustrée aux Figures 11a à 11d, montrant un rail ayant une rainure caractérisée par une ouverture (14) de largeur Lo et un espace (14^{e}) de largeur Le > Lo, et un jonc ayant un rapport, D / d > 1, tel que d < Lo < D, dans le sens de fermeture (Dc) de translation du tambour (2t), le système d'insertion (26) est configuré pour guider, positionner et orienter le jonc (9j) à travers l'ouverture (14) du rail correspondant en présentant un diamètre compris entre d et D et inférieur à Lo. Une fois inséré à travers l'ouverture (14) dans l'espace (14e), le jonc (9j) change spontanément d'orientation par la traction exercée par la couverture tendue d'un bord longitudinal à l'autre. Par ce changement d'orientation visible aux Figures 11b et 11c, le jonc présente une dimension supérieure à la largeur maximale (Lo) de l'ouverture (14) et est donc verrouillé. Le déverrouillage lors de la translation du tambour (2t) dans le sens de l'ouverture (Do) suit le même mécanisme à l'inverse, avec une orientation du jonc de sorte à offrir un diamètre compris entre d et D et inférieur à Lo, afin de permettre au jonc de sortir de la rainure et à la couverture (9) de s'enrouler autour du tambour (2t).

D'autres exemples de verrouillage réversibles du jonc (9j) dans la rainure des rail (6) sont décrits dans WO2012171658 et peuvent s'appliquer au dispositif de la présente invention. Par exemple, le jonc peut être compressible de manière élastique, permettant de diminuer son second diamètre d lors de l'insertion du jonc, tel que d < Lo. Dans un autre exemple, le jonc (9j) est formé par un câble en forme de spires consécutives formant un ressort hélicoïdal, dont l'axe est parallèle au bord longitudinal correspondant de la couverture (9), dans lequel les spires sont définies telles que,
- dans une configuration de repos, le diamètre minimum (d) mesuré parallèle à l'axe transversal (Y) de chaque spire au repos est égal à d0 qui est compris entre la largeurs maximales (Lo, Le) de l'ouverture (14) et de l'espace (14e) du rail correspondant (Lo < d0 < Le), et
- dans une configuration déformée, l'angle formé par des spires déformées avec l'axe longitudinal (X) est modifié de sorte que le diamètre minimum (d1) mesuré dans un plan normal à l'axe longitudinal (X) de chaque spire déformée est inférieur ou égal à la largeur maximale (Lo) de l'ouverture (14) du rail correspondant (d1 ≤ Lo),

Le système d'insertion permet de déformer localement des spires dans leur configuration déformée lors de leur insertion à travers l'ouverture (14) du rail (6) correspondant, les spires recouvrant leur configuration de repos une fois qu'elles se trouvent dans l'espace (14e).

### Verrouillage du jonc (9j) par l'action du cordon de fermeture (1c) ou d'une courroie de verrouillage (7c)

WO2010/010152, WO2010054960 et WO2014064138 décrivent un système de verrouillage du jonc (9j) dans la rainure des rails (6) qui utilise une courroie de verrouillage (7c). Dans cette variante illustrée aux Figures 16a à 16c et 17a à 17c, la rainure dans chaque rail est partiellement fermée par une aile (6a) du côté de la surface (3) à couvrir. Le dispositif comprend à chaque rail (6) une courroie de verrouillage (7c) fixée à chaque extrémité du rail (6). Dans la variante de la Figure 16a, la courroie de verrouillage (7c) est formée par le cordon de fermeture (1c). Chaque courroie de verrouillage (7c) ou cordon de fermeture (1c) est logé dans la rainure entre chaque extrémité du rail (6) et le châssis (23) correspondant et sort de la rainure au niveau du châssis correspondant par l'action de poulies de renvoi (1r, 7r). La couverture (9) enroulée autour de l'essieu (2e) et partiellement déployée sur une partie de la surface (3) n'est pas représentée aux Figure 16a et 17a (ainsi qu'à la Figure 8a) par soucis de clarté des Figures.

Dans la variante illustrée aux Figures 16a à 16c, le système de translation est tel que décrit dans la section intitulée « *Système de fermeture avec cordons de fermeture (1c) fixes »* supra et illustré dans les Figures 1a, 12a à 12d, dans lequel un cordon de fermeture (1c), de préférence cranté, est fixé à chaque extrémité de chaque rail (6) et s'étend dans l'espace (14e) de la rainure correspondante en amont et en aval du châssis (23) relatif au sens de fermeture (Dc). Des poulies de renvoi (1r) sortent le cordon de fermeture (1c) de la rainure de chaque côté amont et aval du châssis (23) qui coiffe sans glissement une bobine de fermeture (1b). La bobine de fermeture (1b) est rigidement fixée à l'axe de fermeture (11) et tourne avec et autour de l'axe de fermeture (11). La rotation de l'axe de fermeture (11) entraine la rotation de la bobine de fermeture (1b), qui « roule » le long du cordon de fermeture (1c), déplaçant ainsi le châssis (23) et le tambour (2t) dans le sens de fermeture (Dc), en provoquant le déroulement de la couverture (9) dont le second bord transversal est fixé à la seconde largeur de la surface à couvrir. Alors que la couverture est déroulée, le jonc est introduit dans l'espace (14e) à travers l'ouverture (14) par le système d'insertion (2r, 26). La poulie de renvoi (1r) située du côté amont du châssis est configuré pour introduire le cordon de fermeture (1c) dans la rainure en amont de la position où le jonc est introduit dans l'espace (14e) du rail. Comme illustré aux Figures 12c et 16b, le cordon de fermeture (1c) installé dans l'espace (14e) en amont du châssis (23) obstrue une partie significative de l'ouverture (14) bloquant ainsi le jonc (9j) dans l'espace (14e) sous l'aile (6a). La couverture (9) est ainsi solidement verrouillée dans la rainure de chaque rail (6).

Cette variante de l'invention est préférée car les cordons de fermeture (1c) permettent à la fois le déplacement du tambour (2t) dans le sens de fermeture (Dc) et le verrouillage des joncs (9j) de la couverture (9) dans la rainure des rails (6) au fur et à mesure que la couverture (9) est posée sur la surface (3).

La variante illustrée aux Figures 17a à 17c utilise le même système de verrouillage que dans la variante des Figures 16a à 16c, mais un système de translation différent, discuté dans la section intitulée « *Système de fermeture avec enroulement de cordons de fermeture (1c) »* illustré aux Figures 1b, 8a, 10a, et 10b (et 17a). Le dispositif comprend donc un cordon de fermeture (1c) utilisé uniquement pour entrainer la translation du tambour (2t) dans le sens de fermeture, et une courroie de verrouillage (7c) utilisée uniquement pour verrouiller le jonc (9j) de la couverture (9) dans la rainure de chaque rail (6). Pour rappel, ces deux fonctions sont remplies par le seul cordon de fermeture (1c) dans la variante discutée supra en rapport avec la Figure 16a.

Comme illustré à la Figure 17a, les poulies de renvoi (7r) sont configurées, comme les poulies de renvoi (1r) de la variante de la Figure 16a discutée supra, pour insérer la courroie de verrouillage (7c) dans la rainure en amont du système d'insertion (26) afin de coincer le jonc (9j) sous l'aile (6a) en ne laissant qu'un espace ouvert dans l'ouverture (14) insuffisant pour permettre au jonc de sortir de la rainure par l'ouverture (14). Les termes « amont » et « aval » sont définis ici par rapport au sens de fermeture (Dc). Dans une variante préférée, illustrée aux Figures 17a et 17c, les poulies de renvoi (7r) sont configurées pour insérer la courroie de verrouillage (7c) dans la rainure en aval d'une poulie de renvoi (1r) configurée pour insérer le cordon de fermeture (1c) dans la rainure du rail correspondant, afin de loger le cordon de fermeture (1c) sous l'aile (6a) à côté de la courroie de verrouillage (7c) comme illustré à la Figure 17c.

### Système d'insertion (26)

Le système d'insertion (26) comprend des roulettes de renvoi (2r) (non illustrées en détails) permettant, d'une part, de tendre la couverture dans la direction transversale, afin de situer le jonc (9j) à l'aplomb de l'ouverture (14) de la rainure et, d'autre part, d'insérer le jonc (9j) dans la rainure de sorte qu'il y demeure verrouillé comme expliqué plus haut. La géométrie du système d'insertion dépend de la géométrie du jonc et de la rainure, ainsi que du mécanisme de verrouillage avec ou sans une courroie de verrouillage (7c).

Des systèmes de verrouillage sont décrits pour différents mécanismes d'insertion dans WO2010054960, WO2017130053, WO2021170500, ou WO2023144062. Ces mécanismes ou variations de celles-ci peuvent être utilisés dans le dispositif de la présente invention sans en altérer l'aspect inventif.

### OUVERTURE ET FERMETURE DE LA SURFACE

Comme illustré à la Figure 10b, la translation du tambour dans le sens d'ouverture (Do) nécessite d'activer la rotation de l'axe d'essieu (12) pour faire tourner le tambour (2t) et ainsi appliquer une force de traction sur la couverture dont le second bord transversal est fixé à la seconde largeur de la surface (3), en permettant l'axe de fermeture (11) de tourner librement, le cas échéant avec un freinage contrôlé à l'aide par exemple d'un frein (19), afin de retirer la couverture de la surface. Comme illustré à la Figure 10a, l'activation de la rotation de l'axe de fermeture (11) est requis pour déplacer le tambour dans le sens de fermeture (Dc) en permettant la rotation libre de l'axe d'essieu (12), le cas échéant avec un freinage contrôlé à l'aide par exemple d'un frein (19), afin de déployer la couverture sur la surface. La rotation de l'axe d'entrainement (10M) est de préférence actionnée par un moteur (M), mais peut aussi l'être par une manivelle. Le moteur (M) est de préférence électrique de préférence couplé à une batterie alimentée par un panneau solaire. Les moyens de rotation (M1, M2) des essieux de tambour (2e) et de fermeture (1) sont de préférence des moteurs électriques.

Dans la plupart des cas et comme illustré à la Figure 1a, un seul moteur (M) ou manivelle associé au système d'embrayage monté sur le seul premier châssis est suffisant pour contrôler la translation du tambour (2t) dans les deux sens de fermeture (Dc) et d'ouverture (Do). Afin de faire tourner synchrone les bobines de fermeture (1b) montées sur le premier et second châssis (23), l'axe de fermeture (11) du premier châssis s'étend parallèle à l'axe transversal (Y) jusqu'à la bobine de fermeture (1b) du second châssis (23) de sorte que la rotation de la bobine de fermeture (1b) du premier châssis (23) entraîne la rotation de la bobine de fermeture (1b) du second châssis.

Cependant, dans certains cas, notamment pour des couvertures de grandes dimensions, surtout dans la direction transversale, il peut être préférable de monter un moteur (M) associé au système d'embrayage sur chacun des deux châssis supportant le tambour (2t), comme illustré à la Figure 1b. Il n'est plus nécessaire que l'axe de fermeture (11) s'étende de la bobine de fermeture (1b) du premier châssis vers la bobine de fermeture (1b) du second châssis, puisque chque châssis (23) est équipé de son propre moteur (M) est système d'embrayage. Il est évidemment nécessaire que les deux moteurs (M) de chaque coté du tambour (2t) soient synchrones, ce qui est facile à contrôler.

Afin de recouvrir la surface (3), il faut déplacer le tambour (2t) dans le sens de fermeture (Dc). Dans la variante où les cordons de fermeture (1c) sont enroulés autour des bobines de fermeture (1b), comme représenté dans la Figures 10a, lorsque le système d'embrayage est réglé dans son état d'enclenchement à l'axe de fermeture (11), la rotation de l'axe de fermeture (11) entraine la rotation des bobines de fermeture (1b) qui enroulent les cordons de fermeture (1c) correspondants. Comme une extrémité de chaque cordon de fermeture (1c) est fixée à la première largeur de la surface (3), la rotation des bobines de fermeture (1b) crée une force de traction sur les cordons de fermeture (1c) qui permet la translation du tambour (2t) vers la première largeur de la surface (3) dans le sens de fermeture (Dc). Dans la variante de déplacement avec des cordons de fermeture (1c) fixés à chaque coin de la surface (3) et coiffant la bobine de fermeture (1b), tel que discuté en rapport avec les Figures 1a et 16a, la rotation de l'axe de fermeture (1b) fait tourner la bobine de fermeture (1b) qui « roule » le long du cordon de fermeture (1c) correspondant.

Alors que le tambour s'éloigne de la seconde largeur de la surface (3), où le second bord transversal de la couverture est fixé, la section de couverture couvrant la portion de surface (3) en amont du tambour (dans le sens de fermeture Dc) se tend et crée une force de traction activant spontanément la rotation du tambour qui est libre dans ce sens de rotation (le cas échéant freiné de manière contrôlée) et déroule ainsi la couverture (10) au fur et à mesure que le tambour se déplace dans le sens de fermeture (Dc). Au fur et à mesure que le tambour (2t) se déplace dans le sens de fermeture (Dc) se rapprochant de la première largeur de la surface, la couverture (9) se déploie sur la surface (3) et le système d'insertion (26) introduit le jonc (9j) de la couverture (9) dans la rainure du rail correspondant dans lequel il est verrouillé, jusqu'à ce que le tambour atteigne la première largeur de la surface (3), recouvrant ainsi la surface (3).

Afin de découvrir la surface (3), il faut déplacer le tambour (2t) dans le sens d'ouverture (Do). Comme représenté dans la Figure 10b, le système d'embrayage est alors réglé dans son état d'enclenchement à l'axe d'essieu (12) et la rotation de l'essieu (2e) enroule la couverture sur le tambour (2t). Comme le second bord transversal de la couverture (9) est fixé à la seconde largeur de la surface (3), la rotation du tambour (2t) et l'enroulement de la couverture (9) qui s'en suit, crée une force de traction sur la portion de couverture (9) déployée qui permet la translation du tambour (2t) vers la seconde largeur de la surface (3) dans le sens d'ouverture (Do). Selon le système de translation dans le sens de fermeture (Dc) utilisé, alors que le tambour s'éloigne de la première largeur de la surface (3), où une extrémité de chaque cordon de fermeture (1c) est fixée, les cordons de fermeture (1c) se déroulent des bobines de fermeture (1b) qui tournent en roue libre ou les bobines de fermeture (1b) « roulent » en roue libre le long des cordons de fermeture (1c). Le cas échéant la libre rotation des roues de fermeture est freinée de manière contrôlée afin de garder les cordons de fermeture (1c) tendus comme discuté supra.

Au fur et à mesure que le tambour se déplace dans le sens d'ouverture (Do), se rapprochant de la seconde largeur de la surface, la couverture (9) se retire de la surface (3) et le système d'insertion (26) déverrouille et sort le jonc (9j) de la couverture (9) hors de la rainure du rail correspondant permettant ainsi l'enroulement de la couverture (9) sur le tambour (2r) jusqu'à ce que le tambour atteigne la seconde largeur de la surface (3), exposant ainsi la surface (3) découverte.

Le dispositif peut comprendre au moins premier et second guides anti-soulèvement (non-illustrés) comprenant une portion externe couplée au premier et second châssis (23) correspondant et une portion interne insérée dans l'espace (14e) du rail correspondant, de sorte à pouvoir coulisser librement le long des rails parallèlement à l'axe longitudinal (X) et ne pouvant s'extraire des rails (6) par l'application d'une force perpendiculaire à l'axe longitudinal (X).

### REMARQUES CONCLUSIVES

Par rapport à un système de translation comprenant deux moteurs pour actionner la rotation du tambour et de la bobine, tel que décrit dans WO2023011789, l'utilisation d'un seul moteur (M) couplé à un système d'embrayage tel que décrit plus haut permet, d'une part, d'économiser le coût d'achat et d'installation d'un second moteur et, d'autre part, de ne pas devoir surmonter la résistance substantielle fournie par le moteur qui n'est pas activé. Ceci permet d'utiliser un moteur de puissance inférieure et donc moins volumineux et moins cher. Dans certains cas, la libre rotation des bobines de fermeture (1b) ou du tambour (2t) doit être contrôlée en appliquant une force de friction adaptée, qui est bien inférieure à la résistance offerte pas le moteur qui n'est pas activé. Le système peut être configuré de sorte que le moteur (M) ou manivelle tourne toujours dans le même sens de rotation que le tambour (2t) se déplace dans le sens de fermeture (Dc) ou d'ouverture (Do). Evidemment, il est également possible de faire tourner le moteur (M) dans des sens de rotation différentes en changeant le sens d'enroulement des bobines de fermeture (1b) ou du tambour (2t).

Le réglage du système d'embrayage entre l'état d'enclenchement à l'axe de fermeture (11) ou à l'axe d'essieu (12) peut se faire manuellement ou à l'aide d'un vérin (5) de préférence électrique ou pneumatique ou hydraulique.

Par rapport à un système de translation tel que décrit dans WO2010054960 comprenant un ressort de torsion pour actionner la rotation du tambour (2t) lors de sa translation dans le sens d'ouverture (Do) qui n'utilise qu'un moteur, le dispositif de la présente invention offre l'énorme avantage de ne pas avoir de ressort de torsion, qui est cher, lourd, complexe à monter et dangereux en cas de manipulation du mécanisme de translation par une personne non qualifiée. Comme le moteur ne doit pas bander le ressort de torsion lors de la translation du tambour (2t) dans le sens de fermeture (Dc), on peut utiliser un moteur de puissance inférieure et donc moins volumineux et moins cher.

Une variante préférée du dispositif de la présente invention comprend,
- un système de fermeture tel que discuté dans la section intitulée « Système *de fermeture avec cordons de fermeture (1c) fixes »* en rapport avec les Figures 1a et 16a, et/ou
- un système verrouillage tel que discuté dans la section intitulée « *Verrouillage du jonc (9j) par l'action du cordon de fermeture (1c) ou d'une courroie de verrouillage (7c)* » en rapport avec les Figures 16a et 16b, et / ou
- un système d'embrayage tel que discuté dans la section intitulée « Système *d'embrayage avec courroies (11c, 12c) avec roulettes d'enclenchement de fermeture (101r) et d'essieu (102r) mobiles »* en rapport avec les Figures 13a à 15c.

| **REF** | **CARACTERISTIQUE** |
|---|---|
| 1b | Bobine de fermeture |
| 1c | Courroie de fermeture |
| 1r | Poulie de renvoi des cordons de fermeture vers la bobine |
| 2c | Courroie d'essieu |
| 2e | Essieu |
| 2r | Poulie de renvoi de la couverture vers l'essieu |
| 2t | Tambour |
| 3 | Surface à couvrir |
| 5 | Vérin |
| 7c | Courroie de verrouillage |
| 7r | Poulie de renvoi de la courroie de verrouillage |
| 9 | Couverture |
| 9j | Jonc |
| 10M | Axe d'entrainement |
| 10M1 | Première roue d'entrainement |
| 10M2 | Seconde roue d'entrainement |
| 10r | Système d'entrainement |
| 11 | Axe de fermeture |
| 11c | Courroie de fermeture |
| 11r | Roue de fermeture |
| 12 | Axe d'essieu |
| 12c | Courroie d'essieu |
| 12r | Roue d'essieu |
| 13r | Roulette d'enclenchement |
| 15 | Levier du système d'embrayage |
| 150 | Ouverture de levier |
| 17 | Dents des courroies de fermeture et d'essieu |
| 19 | Frein de roue libre |
| 23 | Châssis |
| 101r | Roulette d'enclenchement de fermeture |
| 102r | Roulette d'enclenchement d'essieu |
| 110r | Roulette de fermeture |
| 120r | Roulette d'essieu |
| | |
| L10 | Première distance de désenclenchement entre l'axe d'entrainement et l'axe de fermeture |
| L11 | Première distance d'enclenchement entre l'axe d'entrainement et l'axe de fermeture |
| L20 | Seconde distance de désenclenchement entre l'axe d'entrainement et l'axe d'essieu |
| L21 | Seconde distance d'enclenchement entre l'axe d'entrainement et l'axe d'essieu |
| M | Moteur |

## Revendications

1. Dispositif de couverture d'une surface (3) comprise dans un rectangle de première et seconde longueur s'étendant parallèles à un axe longitudinal (X) et de première et seconde largeurs s'étendant parallèles à un axe transversal (Y), normal à l'axe longitudinal (X), le dispositif comprenant :
• une couverture (9) sensiblement rectangulaire de dimensions égales à celle du rectangle et ayant,
∘ premier et second bord transversal opposé l'un à l'autre, le second bord transversal de la couverture étant fixé à la seconde largeur de la surface à couvrir, et
∘ premier et second bord longitudinal opposé l'un à l'autre chaque bord longitudinal étant muni d'un jonc (9j) formant un élément en saillie, s'étendant le long de chaque bord longitudinal
• deux rails (6) placés de part et d'autre de ladite surface (3) parallèles à l'axe longitudinal (X), chaque rail étant constitué d'un profilé ayant une ouverture (14) sur une de ses faces et orientée à l'opposé de la surface à couvrir, formant une rainure s'étendant tout le long de chaque rail,
• un tambour (2t) comprenant un essieu (2e) monté à rotation à un premier et second châssis (23) à chacune de deux extrémités de l'essieu et supportant la couverture (9) apte à enrouler et dérouler la couverture (9) fixée à l'essieu par son premier bord transversal, le tambour (2t) étant monté sur un mécanisme de translation longitudinale permettant la translation longitudinale du tambour le long des deux rails,
∘ dans un sens d'ouverture (Do) parallèle à l'axe longitudinal (X) permettant l'enroulement de la couverture et son retrait de ladite surface (3), entraînée par la rotation de l'essieu (2e) autour d'un axe d'essieu (12),
∘ dans un sens de fermeture (Dc) parallèle à l'axe longitudinal (X) permettant le déroulement de la couverture et son déploiement au-dessus de la surface à couvrir (3) entrainée par la rotation de première et seconde bobine de fermeture (1b) montées à rotation autour d'un axe de fermeture (11) au premier et second châssis (23) et couplées à des premier et second cordon de fermeture (1c) configurés pour entrainer le déplacement du tambour dans le sens de fermeture lors de la rotation des première et seconde bobine de fermeture (1b),
• un système d'insertion (2r, 26) couplé, de préférence rigidement, aux châssis de chaque côté de la surface à couvrir configuré,
∘ pour insérer et verrouiller le jonc (9j) de chaque bord longitudinal de la couverture dans l'ouverture (14) du rail (6) correspondant lors de la translation dans le sens de fermeture (Dc) du tambour entraînant le déroulement de la couverture,
∘ pour déverrouiller et sortir le jonc (9j) de chaque bord longitudinal de la couverture hors de l'ouverture (14) du rail (6) correspondant lors de la translation dans le sens d'ouverture (Do) du tambour entraînant l'enroulement de la couverture
**caractérisé en ce que,** un moteur (M) unique ou manivelle est monté sur le premier châssis (23) et est configuré pour entrainer la rotation d'un axe d'entrainement (10M) et **en ce que** le dispositif comprend un système d'embrayage configuré pour que la rotation de l'axe d'entrainement (10M) n'entraine la rotation que d'un des axes de fermeture (11) et d'essieu (12) à la fois, en passant entre
• un état d'enclenchement à l'axe d'essieu (12) de sorte à transmettre un mouvement de rotation de l'axe d'entrainement (10M) à l'axe d'essieu (12) pour déplacer le tambour (2t) dans le sens d'ouverture (Do) et,
• un état d'enclenchement à l'axe de fermeture (11) de sorte à transmettre un mouvement de rotation de l'axe d'entrainement (10M) à l'axe de fermeture (11) pour déplacer le tambour (2t) dans le sens de fermeture (Dc).

2. Dispositif selon la revendication 1, dans lequel le système d'embrayage comprend,
• une roue de fermeture (11r) configurée pour tourner avec l'axe de fermeture (11),
• une roue d'essieu (12r) configurée pour tourner avec l'axe d'essieu (12),
• un système d'entrainement (10r) comprenant première et seconde roue d'entrainement (10M1, 10M2) montées coaxialement de manière rigide à l'axe d'entrainement (10M) et configurées pour tourner avec l'axe d'entrainement (10M),
• une courroie de fermeture (11c) formant une boucle fermée reliant la première roue d'entrainement (10M1) à la roue de fermeture (11r),
• une courroie d'essieu (12c) formant une boucle fermée reliant la seconde roue d'entrainement (10M2) à la roue d'essieu(12),
dans lequel,
• dans l'état d'enclenchement à l'axe de fermeture (11), la courroie de fermeture (11c) est au moins partiellement tendue, de sorte que la rotation de la première roue d'entrainement (10M1) entraine la rotation de la roue de fermeture (11r), alors que la courroie d'essieu (12c) est détendue,
• dans l'état d'enclenchement à l'axe d'essieu (12), la courroie d'essieu (12c) est au moins partiellement tendue, de sorte que la rotation de la seconde roue d'entrainement (10M2) entraine la rotation de la roue d'essieu (12r), alors que la courroie de fermeture (11c) est détendue.

3. Dispositif selon la revendication 2, dans lequel les axes d'entrainement (10M), de fermeture (11) et d'essieu (12) sont à des positions relatives fixes entre eux et séparés les uns des autres de sorte que les courroies de fermeture et d'essieu (11c, 12c) sont toutes deux détendues, et dans lequel le système d'embrayage comprend,
• une roulette de fermeture (110r) appliquant une pression sur la courroie de fermeture (11c) contre la roue de fermeture (11r),
• une roulette d'essieu (120r) appliquant une pression sur la courroie d'essieu (12c) contre la roue d'essieu (12r),
• une roulette d'enclenchement de fermeture (101r) et une roulette d'enclenchement d'essieu (102r) montées sur une structure configurée pour déplacer la roulette d'enclenchement de fermeture (101r) et la roulette d'enclenchement d'essieu (102r) entre l'état d'enclenchement à l'axe de fermeture (11) et l'état d'enclenchement à l'axe d'essieu (12), de la manière suivante,
∘ dans l'état d'enclenchement à l'axe de fermeture (11), la roulette d'enclenchement de fermeture (101r) est déplacée, de préférence par rotation de la structure, jusqu'à appliquer une pression sur la courroie de fermeture (11c) contre la première roue d'entrainement (10M1), alors que la roulette d'enclenchement d'essieu (102r) n'applique pas ou moins de pression sur la courroie d'essieu (12c), et
∘ dans l'état d'enclenchement à l'axe d'essieu (12), la roulette d'enclenchement d'essieu (102r) est déplacée, de préférence par rotation de la structure, jusqu'à appliquer une pression sur la courroie d'essieu (12c) contre la seconde roue d'entrainement (10M2), alors que la roulette d'enclenchement de fermeture (101r) n'applique pas ou moins de pression sur la courroie de fermeture (11c),

4. Dispositif selon la revendication 2, dans lequel l'axe d'entrainement (10M) est configuré pour être déplacé pour varier une première distance le séparant de l'axe de fermeture (11) entre une première distance d'enclenchement (L11) et une première distance de désenclenchement (L10), et pour simultanément varier une seconde distance le séparant de l'axe d'essieu (12) entre une seconde distance de désenclenchement (L20) et une seconde distance d'enclenchement (L21), respectivement, permettant ainsi de faire tourner,
• soit uniquement la roue d'essieu (12r) et l'axe d'essieu (12), afin de déplacer le tambour (2t) dans le sens d'ouverture (Do), avec la première distance de désenclenchement (L10) et la seconde distance d'enclenchement (L21),
• soit uniquement la roue de fermeture (11r) et l'axe de fermeture (11) afin de déplacer le tambour (2t) dans le sens de fermeture (Dc), avec la première distance d'enclenchement (L11) et la seconde distance de désenclenchement (L20).
en déplaçant l'axe d'entraînement (10M) de sorte à modifier des distances (L10, L11, L20, L21) le séparant des axes d'essieu (12) et de fermeture (11)

5. Dispositif selon la revendication 2, dans lequel les axes d'entrainement (10M), de fermeture (11) et d'essieu (12) sont à des positions relatives fixes entre eux et séparés les uns des autres de sorte que les courroies de fermeture et d'essieu (11c, 12c) sont toutes deux détendues, et dans lequel, une roulette d'enclenchement (13r) reliée à un axe parallèle aux axes d'entrainement (10M), de fermeture (11) et d'essieu (12), l'axe pouvant être déplacé entre
• une première position d'enclenchement dans laquelle la roulette d'enclenchement (13r) appuie sur la courroie de fermeture (11c) la tendant entre la première roue d'entrainement (10M1) et la roue de fermeture (11r) définissant ainsi l'état d'enclenchement à l'axe de fermeture (11) et
• une seconde position d'enclenchement dans laquelle la roulette d'enclenchement (13r) appuie sur la courroie d'essieu (12c) la tendant entre la seconde roue d'entrainement (10M2) et la roue d'essieu (12r) définissant ainsi l'état d'enclenchement à l'axe d'essieu (12).

6. Dispositif selon la revendication 1, dans lequel le système d'embrayage comprend,
• une roue de fermeture (11r) configurée pour tourner avec l'axe de fermeture (11),
• une roue d'essieu (12r) configurée pour tourner avec l'axe d'essieu (12),
• un système d'entrainement (10r) comprenant première et seconde roue d'entrainement (10M1, 10M2) montées coaxialement de manière rigide à l'axe d'entrainement (10M) et configurées pour tourner avec l'axe d'entrainement (10M),
dans lequel l'axe d'entrainement (10M) est configuré pour être déplacé entre,
• une position de fermeture dans laquelle la première roue d'entrainement (10M1) est en contact de frottement avec la roue de fermeture (11r) définissant l'état d'enclenchement à l'axe de fermeture (11) et
• une position d'essieu dans laquelle la seconde roue d'entrainement (10M2) est en contact de frottement avec la roue d'essieux (12r) définissant l'état d'enclenchement à l'axe d'essieu (12).

7. Dispositif selon la revendication 1, dans lequel le système d'embrayage comprend,
• une roue de fermeture (11r) configurée pour tourner avec l'axe de fermeture (11),
• une roue d'essieu (12r) configurée pour tourner avec l'axe d'essieu (12),
• un système d'entrainement (10r) comprenant première et seconde roue d'entrainement (10M1, 10M2) montées coaxialement de manière rigide à l'axe d'entrainement (10M) et configurées pour tourner avec l'axe d'entrainement (10M),
dans lequel les axes d'entrainement (10M), de fermeture (11) et d'essieu (12) sont à des positions relatives fixes entre eux et séparés les uns des autres de sorte que les première et seconde roue d'entrainement (10r), de fermeture (11r) et d'essieu (12r) ne se touchent pas et dans lequel le dispositif comprend de plus une roulette d'enclenchement (13r) reliée à un axe parallèle aux axes d'entrainement (10M), de fermeture (11) et d'essieu (12), l'axe pouvant être déplacé entre
• une position de contact à la roue de fermeture dans laquelle la roulette d'enclenchement (13r) est en contact de frottement avec la première roue d'entrainement (10M1) et la roue de fermeture (11r) définissant ainsi l'état d'enclenchement à l'axe de fermeture (11) et
• une position de contact à l'essieu dans laquelle la roulette d'enclenchement (13r) est en contact de frottement avec la seconde roue d'entrainement (10M2) et la roue d'essieu (12r) définissant ainsi l'état d'enclenchement à l'axe d'essieu (12).

8. Dispositif selon la revendication 6 ou 7, dans lequel les première et seconde roues d'entrainement (10M1, 10M2), la roue de fermeture (11r) et la roue d'essieu (12r) sont des roues dentées ou ont des surfaces de jantes adhérentes, de préférence structurées, permettant une transmission de rotation d'une roue à l'autre sans glissement lorsqu'elles sont en contact de frottement.

9. Dispositif selon l'une quelconque des revendications précédentes, dans lequel le système d'embrayage est configuré pour freiner de manière contrôlée la libre rotation,
• de l'axe de fermeture (11) lorsque le système d'embrayage est dans l'état d'enclenchement à l'axe d'essieu (12) et
• de l'axe d'essieu (12) lorsque le système d'embrayage est dans l'état d'enclenchement à l'axe de fermeture (11).
dans lequel le système d'embrayage est de préférence configuré pour freiner de manière contrôlée la libre rotation des axes de fermeture (11) et d'essieu (12) d'une des manières suivantes,
• un élément de freinage configuré pour appliquer une force de friction sur l'axe ou la roue de fermeture (11, 11r) ou d'essieu (12, 12r) qui n'est pas entrainé en rotation par le système d'entrainement (10r), de préférence l'élément de freinage est résilient et encore de préférence, l'élément de freinage est mobile selon l'état d'enclenchement du système d'embrayage, n'appliquant une force de friction que sur l'axe ou la roue (11, 11r, 12, 12r) qui n'est pas entrainé en rotation par le système d'entrainement (10r), ou
• dans un dispositif selon l'une quelconque des revendications 2 à 6, la courroie de fermeture (11c) ou la courroie d'essieu (12c) qui est détendue applique une force de friction sur la roue de fermeture (11r) ou la roue d'essieu (12r) correspondante qu'elle entoure, suffisante pour freiner la libre rotation de l'axe correspondant.

10. Dispositif selon l'une quelconque des revendications précédentes, dans lequel la rainure dans chaque rail est partiellement fermée par une aile (6a) et dans lequel,
• le dispositif comprend à chaque rail (6) une courroie de verrouillage (1c, 7c) fixée à chaque extrémité du rail (6) logée dans la rainure entre chaque extrémité et le châssis (23) correspondant, et sort de la rainure au niveau du châssis correspondant par l'action de poulies de renvoi (1r, 7r), dans lequel
• Les poulies de renvoi (1r, 7r) sont configurées pour insérer la courroie de verrouillage (1c, 7c) dans la rainure en aval du système d'insertion (26) afin de coincer le jonc (9j) sous l'aile (6a) en ne laissant qu'un espace ouvert dans l'ouverture (14) insuffisant pour permettre au jonc de sortir de la rainure par l'ouverture (14), dans lequel le terme aval est défini par rapport au sens de fermeture (Dc).

11. Dispositif selon la revendication précédente 10, dans lequel les courroies de verrouillage (7c) sont formées par les cordons de fermeture (1c), qui coiffent sans glissement les roues de fermeture (11r) correspondantes.

12. Dispositif selon l'une quelconque des revendications 1 à 9, dans lequel l'ouverture (14) de chaque rail donne accès à un espace (14e) dans le rail de dimensions selon l'axe transversal supérieures à celle de l'ouverture (14) et dans lequel,
• dans une coupe transversale, normale à l'axe longitudinal (X), l'ouverture (14) de la rainure a une largeur maximale (Lo), et l'espace (14e) a une largeur maximale (Le) supérieure à la largeur maximale (Lo) de l'ouverture (14) (Lo < Le), où les largeurs maximales (Lo, Le) sont mesurées parallèles à l'axe transversal (Y), et en ce que,
• dans une coupe normale à chaque bord longitudinal de la couverture, le jonc (9j) correspondant définit une géométrie allongée définie par un rapport (D / d) d'un premier diamètre (D) à un second diamètre (d) supérieur à l'unité (i.e. D / d > 1), de préférence, le rapport D / d > 1.3, encore de préférence D / d > 1.5, dans lequel le premier diamètre (D) est défini comme la longueur de la ligne droite reliant les deux points les plus éloignés l'un de l'autre du périmètre de la géométrie et le second diamètre (d) est la longueur de la plus longue ligne droite perpendiculaire au premier diamètre (D) qui relie deux points du périmètre, et dans lequel
• le système d'insertion est configuré pour orienter le jonc (9j) à travers l'ouverture (14) du rail correspondant en présentant un diamètre compris entre d et D et inférieur à Lo, le jonc (9j) changeant d'orientation une fois que le jonc se trouve dans l'espace (14e) de sorte qu'une fois inséré dans l'espace (14e), le jonc (9j) occupant seul l'espace (14e) ne puisse en ressortir par la seule action d'une force (F) appliquée parallèle à l'axe transversal (Y) dans la direction de la surface (3) à couvrir.

13. Dispositif selon l'une quelconque des revendications précédentes, dans lequel soit,
• le second châssis (23) ne comprend pas de moteur (M) et l'axe de fermeture (11) du premier châssis s'étend parallèle à l'axe transversal (Y) jusqu'à la bobine de fermeture (1b) du second châssis (23) de sorte que la rotation de la bobine de fermeture (1b) du premier châssis (23) entraîne la rotation synchrone de la bobine de fermeture (1b) du second châssis, soit
• le second châssis (23) comprend un second moteur (M) unique configuré pour faire tourner l'axe d'entrainement (10M) et **en ce que** le dispositif comprend un système d'embrayage identique à celui du premier châssis, configuré pour que le second moteur (M) n'entraine la rotation que d'un des axes de fermeture (11) et d'essieu (12) à la fois.

14. Dispositif selon l'une quelconque des revendications précédentes, dans lequel le moteur (M) ou la manivelle tourne dans le même sens dans les directions d'ouverture (Do) et de fermeture (Dc).

15. Utilisation d'un dispositif selon l'une quelconque des revendications précédentes pour couvrir une surface (3) sélectionnée parmi :
(a) un bassin rempli ou non d'un liquide, le bassin étant choisi parmi une piscine, jacuzzi, un bassin de rétention, de traitement ou de désalinisation des eaux un terrain de sports, tel un terrain de tennis ou de cricket ;
(b) une caisse de véhicule,
(c) une surface vitrée telle une serre, un jardin d'hiver ou une fenêtre de véhicule.

## Patentansprüche

1. Vorrichtung zum Abdecken einer Fläche (3), die in einem Rechteck mit einer ersten und einer zweiten Länge, die sich parallel zu einer Längsachse (X) erstrecken, und mit einer ersten und einer zweiten Breite, die sich parallel zu einer Querachse (Y) erstrecken, die senkrecht zu der Längsachse (X) verläuft, enthalten ist, wobei die Vorrichtung umfasst:
• eine im Wesentlichen rechteckige Abdeckung (9) mit Abmessungen gleich denen des Rechtecks und aufweisend
∘ eine erste und eine zweite Querkante, die zueinander entgegengesetzt sind, wobei die zweite Querkante der Abdeckung an der zweiten Breite der abzudeckenden Fläche befestigt ist, und
∘ eine erste und eine zweite Längskante, die zueinander entgegengesetzt sind, wobei jede Längskante mit einer Wulst (9j) versehen ist, die ein abstehendes Element bildet, das sich entlang jeder Längskante erstreckt,
• zwei Schienen (6), die beidseits der Fläche (3) angeordnet sind und parallel zu der Längsachse (X) sind, wobei jede Schiene aus einem Profil besteht, das eine Öffnung (14) auf einer seiner Seiten aufweist, die entgegengesetzt zu der abzudeckenden Fläche ausgerichtet ist und eine Nut bildet, die sich entlang der gesamten Schiene erstreckt,
• eine Trommel (2t), die eine Achse (2e) umfasst, die drehbar an einem ersten und einem zweiten Gestell (23) an jedem der beiden Enden der Achse montiert ist und die Abdeckung (9) trägt und geeignet ist, die an ihrer ersten Querkante an der Achse befestigte Abdeckung (9) aufzuwickeln und abzuwickeln, wobei die Trommel (2t) an einem Längstranslationsmechanismus montiert ist, der die Längstranslation der Trommel entlang der beiden Schienen ermöglicht,
∘ in eine Öffnungsrichtung (Do) parallel zu der Längsachse (X), was das Aufwickeln der Abdeckung und ihr Abziehen von der Fläche (3) ermöglicht, bewirkt durch die Drehung der Achse (2e) um eine Achswelle (12),
∘ in eine Schließrichtung (Dc) parallel zu der Längsachse (X), was das Abwickeln der Abdeckung und deren Ausbreitung über der abzudeckenden Fläche (3) ermöglicht, bewirkt durch die Drehung einer ersten und einer zweiten Schließspule (1b), die drehbar um eine Schließwelle (11) an dem ersten und dem zweiten Gestell (23) montiert sind und mit einer ersten und einer zweiten Schließschnur (1c) gekoppelt sind, die dazu ausgestaltet sind, die Verlagerung der Trommel in die Schließrichtung bei der Drehung der ersten und der zweiten Schließspule (1b) zu bewirken,
• ein Einführsystem (2r, 26), das mit den Gestellen auf jeder Seite der abzudeckenden Fläche, bevorzugt starr, gekoppelt ist und dazu ausgestaltet ist,
∘ die Wulst (9j) jeder Längskante der Abdeckung bei der Translation der Trommel in die Schließrichtung (Dc), die das Abwickeln der Abdeckung bewirkt, in die Öffnung (14) der entsprechenden Schiene (6) einzuführen und darin zu verriegeln,
∘ die Wulst (9j) jeder Längskante der Abdeckung bei der Translation der Trommel in die Öffnungsrichtung (Do), die das Aufwickeln der Abdeckung bewirkt, zu lösen und aus der Öffnung (14) der entsprechenden Schiene (6) zu entnehmen,
**dadurch gekennzeichnet, dass** ein einziger Motor (M) oder eine Kurbel an dem ersten Gestell (23) montiert ist und dazu ausgestaltet ist, die Drehung einer Antriebswelle (10M) zu bewirken, und dass die Vorrichtung ein Kupplungssystem umfasst, das dazu ausgestaltet ist, dass die Drehung der Antriebswelle (10M) die Drehung von nur einer der Schließ- (11) und Achswellen (12) zurzeit bewirkt, indem es wechselt zwischen
• einem Einrückzustand an der Achswelle (12), so dass eine Drehbewegung der Antriebswelle (10M) auf die Achswelle (12) übertragen wird, um die Trommel (2t) in die Öffnungsrichtung (Do) zu verlagern, und
• einem Einrückzustand an der Schließwelle (11), so dass eine Drehbewegung der Antriebswelle (10M) auf die Schließwelle (11) übertragen wird, um die Trommel (2t) in die Schließrichtung (Dc) zu verlagern.

2. Vorrichtung nach Anspruch 1, wobei das Kupplungssystem umfasst,
• ein Schließrad (11r), das dazu ausgestaltet ist, mit der Schließwelle (11) zu drehen,
• ein Achsrad (12r), das dazu ausgestaltet ist, mit der Achswelle (12) zu drehen,
• ein Antriebssystem (10r), umfassend ein erstes und ein zweites Antriebsrad (10M1, 10M2), die koaxial starr an der Antriebswelle (10M) montiert sind und dazu ausgestaltet sind, mit der Antriebswelle (10M) zu drehen,
• einen Schließriemen (11c), der eine geschlossene Schlaufe bildet, die das erste Antriebsrad (10M1) mit dem Schließrad (11r) verbindet,
• einen Achsriemen (12c), der eine geschlossene Schlaufe bildet, die das zweite Antriebsrad (10M2) mit dem Achsrad (12) verbindet,
wobei
• der Schließriemen (11c) in dem Einrückzustand an der Schließwelle (11) mindestens teilweise gespannt ist, so dass die Drehung des ersten Antriebsrads (10M1) die Drehung des Schließrads (11r) bewirkt, während der Achsriemen (12c) entspannt ist,
• der Achsriemen (12c) in dem Einrückzustand an der Achswelle (12) mindestens teilweise gespannt ist, so dass die Drehung des zweiten Antriebsrads (10M2) die Drehung des Achsrads (12r) bewirkt, während der Schließriemen (11c) entspannt ist.

3. Vorrichtung nach Anspruch 2, wobei die Antriebs-(10M), Schließ- (11) und Achswellen (12) an festen relativen Positionen zueinander liegen und voneinander so getrennt sind, dass die Schließ- und Achsriemen (11c, 12c) beide entspannt sind, und wobei das Kupplungssystem umfasst:
• eine Schließrolle (110r), die einen Druck auf den Schließriemen (11c) gegen das Schließrad (11r) ausübt,
• eine Achsrolle (120r), die einen Druck auf den Achsriemen (12c) gegen das Achsrad (12r) ausübt,
• eine Schließeinrückrolle (101r) und eine Achseinrückrolle (102r), die an einer Struktur montiert sind, die dazu ausgestaltet ist, die Schließeinrückrolle (101r) und die Achseinrückrolle (102r) zwischen dem Einrückzustand an der Schließwelle (11) und dem Einrückzustand an der Achswelle (12) auf die folgende Weise zu verlagern:
∘ in dem Einrückzustand an der Schließwelle (11) wird die Schließeinrückrolle (101 r), vorzugsweise durch Drehung der Struktur, verlagert, bis ein Druck auf den Schließriemen (11c) gegen das erste Antriebsrad (10M1) ausgeübt wird, während die Achseinrückrolle (102r) keinen oder weniger Druck auf den Achsriemen (12c) ausübt, und
∘ in dem Einrückzustand an der Achswelle (12) wird die Achseinrückrolle (102r), vorzugsweise durch Drehung der Struktur, verlagert, bis ein Druck auf den Achsriemen (12c) gegen das zweite Antriebsrad (10M2) ausgeübt wird, während die Schließeinrückrolle (101r) keinen oder weniger Druck auf den Schließriemen (11c) ausübt.

4. Vorrichtung nach Anspruch 2, wobei die Antriebswelle (10M) dazu ausgestaltet ist, verlagert zu werden, um einen ersten Abstand, der sie von der Schließwelle (11) trennt, zwischen einem ersten Einrückabstand (L11) und einem ersten Ausrückabstand (L10) zu variieren bzw. um gleichzeitig einen zweiten Abstand, der sie von der Achswelle (12) trennt, zwischen einem zweiten Ausrückabstand (L20) und einem zweiten Einrückabstand (L21) zu variieren, was es somit ermöglicht, drehen zu lassen:
• entweder nur das Achsrad (12r) und die Achswelle (12), um die Trommel (2t) in die Öffnungsrichtung (Do) zu verlagern, mit dem ersten Ausrückabstand (L10) und dem zweiten Einrückabstand (L21),
• oder nur das Schließrad (11r) und die Schließwelle (11), um die Trommel (2t) in die Schließrichtung (Dc) zu verlagern, mit dem ersten Einrückabstand (L11) und dem zweiten Ausrückabstand (L20),
indem die Antriebswelle (10M) so verlagert wird, dass Abstände (L10, L11, L20, L21) geändert werden, die sie von den Achs- (12) und Schließwellen (11) trennen.

5. Vorrichtung nach Anspruch 2, wobei die Antriebs-(10M), Schließ- (11) und Achswellen (12) an festen relativen Positionen zueinander liegen und voneinander so getrennt sind, dass die Schließ- und Achsriemen (11c, 12c) beide entspannt sind, und wobei eine Einrückrolle (13r) mit einer Welle verbunden ist, die parallel zu den Antriebs- (10M), Schließ- (11) und Achswellen (12) verläuft, wobei die Welle verlagert werden kann zwischen
• einer ersten Einrückposition, in der die Einrückrolle (13r) auf den Schließriemen (11c) drückt und ihn zwischen dem ersten Antriebsrad (10M1) und dem Schließrad (11r) spannt, was den Einrückzustand an der Schließwelle (11) definiert, und
• einer zweiten Einrückposition, in der die Einrückrolle (13r) auf den Achsriemen (12c) drückt und ihn zwischen dem zweiten Antriebsrad (10M2) und dem Achsrad (12r) spannt, was den Einrückzustand an der Achswelle (12) definiert.

6. Vorrichtung nach Anspruch 1, wobei das Kupplungssystem umfasst,
• ein Schließrad (11r), das dazu ausgestaltet ist, mit der Schließwelle (11) zu drehen,
• ein Achsrad (12r), das dazu ausgestaltet ist, mit der Achswelle (12) zu drehen,
• ein Antriebssystem (10r), umfassend ein erstes und ein zweites Antriebsrad (10M1, 10M2), die koaxial starr an der Antriebswelle (10M) montiert sind und dazu ausgestaltet sind, mit der Antriebswelle (10M) zu drehen, wobei die Antriebswelle (10M) dazu ausgestaltet ist, verlagert zu werden zwischen
• einer Schließposition, in der das erste Antriebsrad (10M1) mit dem Schließrad (11r) in Reibkontakt steht, was den Einrückzustand an der Schließwelle (11) definiert, und
• einer Achsposition, in der das zweite Antriebsrad (10M2) mit dem Achsrad (12r) in Reibkontakt steht, was den Einrückzustand an der Achswelle (12) definiert.

7. Vorrichtung nach Anspruch 1, wobei das Kupplungssystem umfasst,
• ein Schließrad (11r), das dazu ausgestaltet ist, mit der Schließwelle (11) zu drehen,
• ein Achsrad (12r), das dazu ausgestaltet ist, mit der Achswelle (12) zu drehen,
• ein Antriebssystem (10r), umfassend ein erstes und ein zweites Antriebsrad (10M1, 10M2), die koaxial starr an der Antriebswelle (10M) montiert sind und dazu ausgestaltet sind, mit der Antriebswelle (10M) zu drehen, wobei die Antriebs- (10M), Schließ- (11) und Achswellen (12) in festen relativen Positionen zueinander liegen und voneinander so getrennt sind, dass das erste und das zweite Antriebs- (10r), Schließ- (11r) und Achsrad (12r) sich nicht berühren, und wobei die Vorrichtung zusätzlich eine Einrückrolle (13r) umfasst, die mit einer Welle verbunden ist, die parallel zu den Antriebs- (10M), Schließ- (11) und Achswellen (12) verläuft, wobei die Welle verlagert werden kann zwischen
• einer Kontaktposition an dem Schließrad, in der die Einrückrolle (13r) mit dem ersten Antriebsrad (10M1) und dem Schließrad (11r) in Reibkontakt steht, was den Einrückzustand an der Schließwelle (11) definiert, und
• einer Kontaktposition an der Achse, in der die Einrückrolle (13r) mit dem zweiten Antriebsrad (10M2) und dem Achsrad (12r) in Reibkontakt steht, was den Einrückzustand an der Achswelle (12) definiert.

8. Vorrichtung nach Anspruch 6 oder 7, wobei das erste und zweite Antriebsrad (10M1, 10M2), das Schließrad (11r) und das Achsrad (12r) Zahnräder sind oder haftende, bevorzugt strukturierte, Felgenflächen haben, die eine schlupffreie Übertragung der Drehung eines Rads auf das andere ermöglichen, wenn sie in Reibkontakt stehen.

9. Vorrichtung nach einem der vorhergehenden Ansprüche, wobei das Kupplungssystem dazu ausgestaltet ist, die freie Drehung kontrolliert zu bremsen von:
• der Schließwelle (11), wenn das Kupplungssystem im Einrückzustand an der Achswelle (12) ist, und
• der Achswelle (12), wenn das Kupplungssystem im Einrückzustand an der Schließwelle (11) ist,
wobei das Kupplungssystem bevorzugt dazu ausgestaltet ist, die freie Drehung der Schließ- (11) und Achswelle (12) auf eine der folgenden Weisen kontrolliert zu bremsen:
• ein Bremselement, das dazu ausgestaltet ist, eine Reibkraft auf die Schließwelle oder das Schließrad (11, 11r) oder die Achswelle oder das Achsrad (12, 12r), die bzw. das von dem Antriebssystem (10r) nicht drehangetrieben wird, auszuüben, wobei das Bremselement bevorzugt schlagzäh ist und wobei das Bremselement noch bevorzugter je nach dem Einrückzustand des Kupplungssystems beweglich ist, übt eine Reibkraft nur auf die Welle oder das Rad (11, 11r, 12, 12r) aus, die oder das von dem Antriebssystem (10r) nicht drehangetrieben wird, oder
• in einer Vorrichtung nach einem der Ansprüche 2 bis 6 übt der Schließriemen (11c) oder der Achsriemen (12c), der entspannt ist, eine Reibkraft auf das entsprechende Schließrad (11r) oder das Achsrad (12r), das er umgibt, aus, die ausreicht, um die freie Drehung der entsprechenden Welle zu bremsen.

10. Vorrichtung nach einem der vorhergehenden Ansprüche, wobei die Nut in jeder Schiene teilweise durch einen Schenkel (6a) geschlossen wird und wobei
• die Vorrichtung an jeder Schiene (6) einen Verriegelungsriemen (1c, 7c) umfasst, der an jedem Ende der Schiene (6) befestigt ist und in der Nut zwischen jedem Ende und dem entsprechenden Gestell (23) aufgenommen ist und aus der Nut an dem entsprechenden Gestell durch die Einwirkung von Umlenkscheiben (1r, 7r) austritt, wobei
• die Umlenkscheiben (1r, 7r) dazu ausgestaltet sind, den Verriegelungsriemen (1c, 7c) in die Nut stromab des Einführsystems (26) einzuführen, um die Wulst (9j) unter dem Schenkel (6a) einzuklemmen, wobei in der Öffnung (14) nur ein offener Raum gelassen wird, der nicht ausreicht, um der Wulst zu ermöglichen, aus der Nut durch die Öffnung (14) auszutreten, wobei der Begriff stromab in Bezug auf die Schließrichtung (Dc) definiert ist.

11. Vorrichtung nach dem vorhergehenden Anspruch 10, wobei die Verriegelungsriemen (7c) durch die Schließschnüre (1c) gebildet werden, die die entsprechenden Schließräder (11r) schlupffrei bedecken.

12. Vorrichtung nach einem der Ansprüche 1 bis 9, wobei die Öffnung (14) jeder Schiene Zugang zu einem Raum (14e) in der Schiene mit Abmessungen entlang der Querachse, die größer als die der Öffnung (14) sind, bietet, und wobei
• in einem Querschnitt, der senkrecht zu der Längsachse (X) verläuft, die Öffnung (14) der Nut eine maximale Breite (Lo) hat und der Raum (14e) eine maximale Breite (Le) hat, die größer als die maximale Breite (Lo) der Öffnung (14) ist (Lo < Le), wobei die maximalen Breiten (Lo, Le) parallel zu der Querachse (Y) gemessen werden, und dadurch, dass
• in einem Schnitt, der senkrecht zu jeder Längskante der Abdeckung verläuft, die entsprechende Wulst (9j) eine längliche Geometrie definiert, die durch ein Verhältnis (D/d) eines ersten Durchmessers (D) zu einem zweiten Durchmesser (d) größer als eins (d. h. D/d > 1), bevorzugt ein Verhältnis D/d > 1,3, noch bevorzugter D/d > 1,5 definiert ist, wobei der erste Durchmesser (D) als die Länge der geraden Linie definiert ist, die die beiden am weitesten voneinander entfernten Punkte des Umfangs der Geometrie verbindet, und der zweite Durchmesser (d) die Länge der längsten geraden Linie senkrecht zu dem ersten Durchmesser (D) ist, die zwei Punkte des Umfangs verbindet, und wobei
• das Einführsystem dazu ausgestaltet ist, die Wulst (9j) durch die Öffnung (14) der entsprechenden Schiene hindurch auszurichten, wobei sie einen Durchmesser zwischen d und D und kleiner als Lo aufweist, wobei die Wulst (9j) die Ausrichtung ändert, sobald sich die Wulst in dem Raum (14e) befindet, so dass die Wulst (9j), sobald sie in den Raum (14e) eingeführt ist, den Raum (14e) allein einnimmt und aus ihm durch die bloße Einwirkung einer Kraft (F), die parallel zu der Querachse (Y) in Richtung der abzudeckenden Fläche (3) ausgeübt wird, nicht wieder aus ihm austreten kann.

13. Vorrichtung nach einem der vorhergehenden Ansprüche, wobei entweder
• das zweite Gestell (23) keinen Motor (M) umfasst und die Schließwelle (11) des ersten Gestells sich parallel zu der Querachse (Y) bis zu der Schließspule (1b) des zweiten Gestells (23) erstreckt, so dass die Drehung der Schließspule (1b) des ersten Gestells (23) die synchrone Drehung der Schließspule (1b) des zweiten Gestells bewirkt, oder
• das zweite Gestell (23) einen zweiten einzigen Motor (M) umfasst, der dazu ausgestaltet ist, die Antriebswelle (10M) zu drehen, und dadurch, dass die Vorrichtung ein Kupplungssystem umfasst, das identisch mit dem des ersten Gestells ist, und so ausgestaltet ist, dass der zweite Motor (M) die Drehung nur einer der Schließ- (11) und der Achswellen (12) zurzeit antreibt.

14. Vorrichtung nach einem der vorhergehenden Ansprüche, wobei der Motor (M) oder die Kurbel in der Öffnungsrichtung (Do) und Schließrichtung (Dc) in die gleiche Richtung dreht.

15. Verwendung einer Vorrichtung nach einem der vorhergehenden Ansprüche zum Abdecken einer Fläche (3), die ausgewählt ist aus:
(a) einem mit einer Flüssigkeit gefüllten oder nicht gefüllten Becken, wobei das Becken aus einem Schwimmbecken, einem Whirlpool, einem Rückhalte-, Aufbereitungs- oder Entsalzungsbecken für Wasser eines Sportplatzes wie eines Tennis- oder Cricketplatzes gewählt ist;
(b) einer Fahrzeugkarosserie,
(c) einer verglasten Fläche wie einem Gewächshaus, einem Wintergarten oder einem Fahrzeugfenster.

## Claims

1. Device for covering a surface (3) contained within a rectangle with first and second lengths extending parallel to a longitudinal axis (X) and first and second widths extending parallel to a transverse axis (Y), normal to the longitudinal axis (X), the device comprising:
• a substantially rectangular cover (9) with dimensions equal to those of the rectangle and having
∘ first and second transverse edges opposite one another, the second transverse edge of the cover being fixed to the second width of the surface to be covered, and
∘ first and second longitudinal edges opposite one another, each longitudinal edge being provided with a bead (9j) forming a projecting element, extending along each longitudinal edge,
• two rails (6) placed on respective opposite sides of said surface (3) parallel to the longitudinal axis (X), each rail consisting of a profiled member having an opening (14) on one of its faces oriented away from the surface to be covered and forming a groove extending all along each rail,
• a drum (2t) comprising an axle (2e) mounted to rotate on first and second chassis (23) at each of two ends of the axle and supporting the cover (9) able to wind and to unwind the cover (9) fixed to the axle by its first transverse edge, the drum (2t) being mounted on a longitudinal translation mechanism enabling longitudinal translation of the drum along the two rails,
∘ in an opening sense (Do) parallel to the longitudinal axis (X) enabling winding of the cover and its withdrawal from said surface (3), driven by the rotation of the axle (2e) about an axle shaft (12),
∘ in a closing sense (Dc) parallel to the longitudinal axis (X) enabling unwinding of the cover and its deployment over the surface (3) to be covered, driven by the rotation of first and second closing spools (1b) mounted to rotate about a closing shaft (11) on the first and second chassis (23) and coupled to first and second closing cords (1c) configured to drive the movement of the drum in the closing sense during the rotation of the first and second closing spools (1b),
• an insertion system (2r, 26) coupled, preferably rigidly, to the chassis on respective opposite sides of the surface to be covered and configured
∘ to insert and to lock the bead (9j) of each longitudinal edge of the cover in the opening (14) of the corresponding rail (6) during the translation in the closing sense (Dc) of the drum driving the unwinding of the cover,
∘ to unlock and to extract the bead (9j) on each longitudinal edge of the cover out of the opening (14) of the corresponding rail (6) during the translation in the opening sense (Do) of the drum driving the winding of the cover,
**characterized in that,** a single motor (M) or crank is mounted on the first chassis (23) and is configured to drive the rotation of a driving shaft (10M) and **in that** the device comprises a clutch system configured so that the rotation of the driving shaft (10M) drives only the rotation of one of the closing shaft (11) and the axle shaft (12) at a time, passing between
• a state engaged with the axle shaft (12) so as to transmit a rotation movement of the driving shaft (10M) to the axle shaft (12) to move the drum (2t) in the opening sense (Do), and
• a state engaged with the closing shaft (11) so as to transmit a rotation movement of the driving shaft (10M) to the closing shaft (11) to move the drum (2t) in the closing sense (Dc).

2. Device according to Claim 1, in which the clutch system comprises
• a closing wheel (11r) configured to rotate with the closing shaft (11),
• an axle wheel (12r) configured to rotate with the axle shaft (12),
• a drive system (10r) comprising first and second driving wheels (10M1, 10M2) mounted coaxially and rigidly on the driving shaft (10M) and configured to rotate with the driving shaft (10M),
• a closing belt (11c) forming a closed loop connecting the first driving wheel (10M1) to the closing wheel (11r),
• an axle belt (12c) forming a closed loop connecting the second driving wheel (10M2) to the axle wheel (12), in which,
• in the state engaged with the closing shaft (11), the closing belt (11c) is at least partly tensioned, so that the rotation of the first driving wheel (10M1) drives the rotation of the closing wheel (11r), while the axle belt (12c) is relaxed,
• in the state engaged with the axle shaft (12), the axle belt (12c) is at least partly tensioned, so that the rotation of the second driving wheel (10M2) drives the rotation of the axle wheel (12r), while the closing belt (11c) is slack.

3. Device according to Claim 2, in which the driving shaft (10M), the closing shaft (11) and the axle shaft (12) are at fixed positions relative to one another and separated from one another so that the closing and axle belts (11c, 12c) are both slack, and in which the clutch system comprises
• a closing roller (110r) pressing the closing belt (11c) against the closing wheel (11r),
• an axle roller (120r) pressing the axle belt (12c) against the axle wheel (12r),
• a closing engagement roller (101r) and an axle engagement roller (102r) mounted on a structure configured to move the closing engagement roller (101r) and the axle engagement roller (102r) between the state engaged with the closing shaft (11) and the state engaged with the axle shaft (12), in the following manner,
∘ in the state engaged with the closing shaft (11), the closing engagement roller (101r) is moved, preferably by rotation of the structure, until it presses the closing belt (11c) against the first driving wheel (10M1), while the axle engagement roller (102r) applies no or less pressure to the axle belt (12c), and
∘ in the state engaged with the axle shaft (12), the axle engagement roller (102r) is moved, preferably by rotation of the structure, until it presses the axle belt (12c) against the second driving wheel (10M2), while the closing engagement roller (101r) applies no or less pressure to the closing belt (11c).

4. Device according to Claim 2, in which the driving shaft (10M) is configured to be moved to vary a first distance separating it from the closing shaft (11) between a first engagement distance (L11) and a first disengagement distance (L10), and simultaneously to vary a second distance separating it from the axle shaft (12) between a second disengagement distance (L20) and a second engagement distance (L21), respectively, thus enabling
• either turning of only the axle wheel (12r) and the axle shaft (12), in order to move the drum (2t) in the opening sense (Do), with the first disengagement distance (L10) and the second engagement distance (L21),
• or turning of only the closing wheel (11r) and the closing shaft (11), in order to move the drum (2t) in the closing sense (Dc), with the first engagement distance (L11) and the second disengagement distance (L20),
by moving the driving shaft (10M) so as to modify the distances (L10, L11, L20, L21) separating it from the axle shaft (12) and the closing shaft (11).

5. Device according to Claim 2, in which the driving shaft (10M), the closing shaft (11) and the axle shaft (12) are at fixed positions relative to one another and separated from one another so that the closing and axle belts (11c, 12c) are both slack, and in which an engagement roller (13r) is connected to a shaft parallel to the driving shaft (10M), the closing shaft (11) and the axle shaft (12), the shaft being movable between
• a first engagement position in which the engagement roller (13r) presses on the closing belt (11c) to tension it between the first driving wheel (10M1) and the closing wheel (11r) thereby defining the state engaged with the closing shaft (11), and
• a second engagement position in which the engagement roller (13r) presses on the axle belt (12c) to tension it between the second driving wheel (10M2) and the axle wheel (12r) thereby defining the state engaged with the axle shaft (12).

6. Device according to Claim 1, in which the clutch system comprises
• a closing wheel (11r) configured to rotate with the closing shaft (11),
• an axle wheel (12r) configured to rotate with the axle shaft (12),
• a drive system (10r) comprising first and second driving wheels (10M1, 10M2) mounted coaxially and rigidly on the driving shaft (10M) and configured to rotate with the driving shaft (10M),
in which the driving shaft (10M) is configured to be moved between
• a closing position in which the first driving wheel (10M1) is in rubbing contact with the closing wheel (11r) defining the state engaged with the closing shaft (11), and
• an axle position in which the second driving wheel (10M2) is in rubbing contact with the axle wheel (12r) defining the state engaged with the axle shaft (12).

7. Device according to Claim 1, in which the clutch system comprises
• a closing wheel (11r) configured to rotate with the closing shaft (11),
• an axle wheel (12r) configured to rotate with the axle shaft (12),
• a drive system (10r) comprising first and second driving wheels (10M1, 10M2) mounted coaxially and rigidly on the driving shaft (10M) and configured to rotate with the driving shaft (10M),
in which the driving shaft (10M), the closing shaft (11) and the axle shaft (12) are at fixed positions relative to one another and separated from one another so that the first and second driving wheels (10r), the closing wheel (11r) and the axle wheel (12r) do not touch and in which the device further comprises an engagement roller (13r) connected to a shaft parallel to the driving shaft (10M), the closing shaft (11) and the axle shaft (12), the shaft being movable between
• a position in contact with the closing wheel in which the engagement roller (13r) is in rubbing contact with the first driving wheel (10M1) and the closing wheel (11r) thereby defining the state of engagement with the closing shaft (11), and
• a position in contact with the axle in which the engagement roller (13r) is in rubbing contact with the second driving wheel (10M2) and the axle wheel (12r) thereby defining the state of engagement with the axle shaft (12).

8. Device according to Claim 6 or 7, in which the first and second driving wheels (10M1, 10M2), the closing wheel (11r) and the axle wheel (12r) are toothed wheels or have adherent, preferably structured, rim surfaces, enabling transmission of rotation from one wheel to the other without slipping when they are in rubbing contact.

9. Device according to any one of the preceding claims, in which the clutch system is configured to brake in controlled manner the free rotation
• of the closing shaft (11) when the clutch system is in the state engaged with the axle shaft (12), and
• of the axle shaft (12) when the clutch system is in the state engaged with the closing shaft (11),
in which the clutch system is preferably configured for braking in controlled manner the free rotation of the closing shaft (11) and the axle shaft (12) in one of the following manners,
• a braking element configured to apply a friction force to the closing shaft or the closing wheel (11, 11r) or the axle shaft or the axle wheel (12, 12r) that is not driven in rotation by the drive system (10r), the braking element is preferably resilient and the braking element is more preferably mobile according to the state of engagement of the clutch system, applying a friction force only to the shaft or the wheel (11, 11r, 12, 12r) that is not driven in rotation by the drive system (10r), or
• in a device according to any one of Claims 2 to 6, the closing belt (11c) or the axle belt (12c) that is slack applies a friction force to the corresponding closing wheel (11r) or axle wheel (12r) that it surrounds, sufficient to brake the free rotation of the corresponding shaft.

10. Device according to any one of the preceding claims, in which the groove in each rail is partly closed by a flange (6a) and in which
• the device comprises at each rail (6) a locking belt (1c, 7c) which is fixed to each end of the rail (6), housed in the groove between each end and the corresponding chassis (23), and exits the groove at the level of the corresponding chassis by the action of idler pulleys (1r, 7r), in which
• the idler pulleys (1r, 7r) are configured to insert the locking belt (1c, 7c) in the groove downstream of the insertion system (26) in order to wedge the bead (9j) under the flange (6a) leaving only an open space in the opening (14) that is insufficient to allow the bead to exit the groove via the opening (14), wherein the term downstream is defined relative to the closing sense (Dc).

11. Device according to the preceding Claim 10, in which the locking belts (7c) are formed by the closing cords (1c), which wrap without slipping the corresponding closing wheels (11r).

12. Device according to any one of Claims 1 to 9, in which the opening (14) of each rail gives access to a space (14e) in the rail with dimensions along the transverse axis greater than that of the opening (14), and in which
• in cross section normal to the longitudinal axis (X) the opening (14) of the groove has a maximum width (Lo) and the space (14e) has a maximum width (Le) greater than the maximum width (Lo) of the opening (14) (Lo < Le), where the maximum widths (Lo, Le) are measured parallel to the transverse axis (Y), and in that
• in a section normal to each longitudinal edge of the cover the corresponding bead (9j) defines an elongate geometry defined by a ratio (D / d) of a first diameter (D) to a second diameter (d) greater than unity (i.e. D / d > 1), preferably the ratio D / d > 1.3, more preferably D / d > 1.5, in which the first diameter (D) is defined as the length of the straight line linking the two points the farthest apart from one another of the perimeter of the geometry and the second diameter (d) is the length of the longest straight line perpendicular to the first diameter (D) that connects two points of the perimeter, and in which
• the insertion system is configured to orient the bead (9j) across the opening (14) in the corresponding rail by having a diameter between d and D and less than Lo, the bead (9j) changing orientation once the bead is located in the space (14e) so that once inserted in the space (14e), the bead (9j) alone occupying the space (14e) cannot escape from it only because of the action of a force (F) applied parallel to the transverse axis (Y) in the direction of the surface (3) to be covered.

13. Device according to any one of the preceding claims, in which, either
• the second chassis (23) comprises no motor (M) and the closing shaft (11) of the first chassis extends parallel to the transverse axis (Y) as far as the closing spool (1b) of the second chassis (23) so that the rotation of the closing spool (1b) of the first chassis (23) drives the synchronous rotation of the closing spool (1b) of the second chassis, or
• the second chassis (23) comprises a single second motor (M) configured to cause the driving shaft (10M) to rotate and in that the device comprises a clutch system identical to that of the first chassis, configured so that the second motor (M) drives the rotation of only one of the closing shaft (11) and the axle shaft (12) at a time.

14. Device according to any one of the preceding claims, in which the motor (M) or the crank turns the same way in the opening sense (Do) and the closing sense (Dc).

15. Use of a device according to any one of the preceding claims to cover a surface (3) selected from:
(a) a pool filled with a liquid or empty, the pool being chosen from a swimming pool, jacuzzi, retention pool, water treatment or water desalination pool, a sports ground, such as a tennis court or cricket pitch;
(b) a vehicle body,
(c) a glazed surface such as a greenhouse, a winter garden or a vehicle window.
